# FASCICULE DE BREVET EUROPEEN

(11) **EP 3 840 149 B1**
(45) Date de publication et mention de la délivrance du brevet: **06.08.2025**
(21) Numéro de dépôt: 20209994.1
(22) Date de dépôt: 26.11.2020
(51) Int. Cl.: H02G 3/08, H05K 5/02, H02G 3/10, H02G 3/12, H02G 3/14, H02G 3/18

(54) **APPAREILLAGE COMPRENANT UN BLOC DE FINITION AMOVIBLE**
ANLAGE, DIE EINEN ABNEHMBAREN BLOCK UMFASST
DEVICE COMPRISING A REMOVABLE FINISHING UNIT

(30) Priorité: 16.12.2019 FR 1914508
(43) Date de publication de la demande: 23.06.2021
(73) Titulaire: Legrand France, 87000 Limoges (FR); Legrand SNC, 87000 Limoges (FR)
(72) Inventeur: LOCHET, Anthony, 72170 Meurce (FR); PALICKI, Vincent, 87510 Peyrilhac (FR)
(74) Mandataire: Jacobacci Coralis Harle

(56) Documents cités:
- EP-A1- 0 921 546
- EP-A1- 1 860 748
- EP-A2- 1 109 270
- WO-A1-2017/083913
- FR-A1- 2 999 024
- US-A1- 2009 218 128

## Description

La présente invention concerne, de manière générale, les appareillages qui apparaissent en saillie sur un support quelconque.

Avantageusement, il peut s'agir d'appareillages mobiles qui se posent directement sur une paroi quelconque dans un espace de travail ou de loisir, comme une paroi de mobilier telle qu'une paroi de bureau ou un plateau d'une table de travail ou de réunion ou une paroi d'un meuble de rangement ou encore une paroi d'une console.

Il peut s'agir également mais non exclusivement d'appareillages rapportés ou fixés sur un pied ou un support mobile à poser sur le plancher d'une pièce de travail ou de loisir ou encore fixés sur un élément d'accroche telle qu'une pince ou un étau à accrocher au bord d'une quelconque paroi.

L'invention concerne plus particulièrement un appareillage comprenant un boîtier qui enferme au moins un mécanisme d'appareillage dont la partie fonctionnelle est accessible à l'utilisateur sur une face avant dudit appareillage.

On entend ici par face avant de l'appareillage, une face tournée vers l'utilisateur.

L'invention trouve une application particulièrement avantageuse dans la réalisation de prises de courant fort ou de courant faible, de prolongateurs ou encore de multiprises.

Actuellement, le boîtier de ce type d'appareillage forme l'enveloppe externe de celui-ci. Il est réalisé en matière plastique dans une couleur donnée.

Par ailleurs, le document EP1860748 décrit un appareillage électrique comprenant un boîtier pourvu d'un socle ouvert à l'avant et d'un cadre encliqueté sur le socle. Le cadre prolonge vers l'avant la paroi latérale du socle et délimite une ouverture avant d'accès à l'intérieur du boîtier. Le cadre est pourvu de moyens de montage d'un enjoliveur rapporté sur le cadre pour fermer ladite ouverture avant.

En outre, le document EP0921546 décrit un boîtier électrique avec une embase ouverte à l'avant et un couvercle rapporté sur l'embase pour fermer de manière étanche l'ouverture avant de l'embase. Le couvercle est ici monté sur l'embase de sorte que la paroi latérale périphérique du couvercle s'étend dans le prolongement de la paroi latérale périphérique de l'embase.

Le document D1: FR2999024 divulgue un socle (Fig. 1-2 élément 1), un bloc de finition (Fig.1 élément 5) avec une ouverture. Le document D1 divulgue aussi une enveloppe centrale (Fig.9 élément 11) qui est logée sur la face avant du bloc de finition et pas sur une paroi de fermeture.

Le but de la présente invention est alors de proposer un nouvel appareillage dont la finition peut être facilement modifiée par l'utilisateur et adaptée aux tendances actuelles tout en permettant d'y ajouter des éléments pour créer des nouvelles fonctions utiles à l'utilisateur.

Plus particulièrement, l'invention propose un appareillage selon la revendication 1.

Ainsi, avantageusement, grâce à l'invention, l'utilisateur peut aisément ajuster l'aspect de son appareillage aux tendances actuelles en matière de décoration. Il peut démonter aisément le bloc de finition pour modifier la couleur et/ou la matière de finition de son appareillage. Le bloc de finition de l'appareillage conforme à l'invention peut être choisi dans un coffret proposant plusieurs blocs de finition déclinés en différentes matière et/ou différentes couleurs.

Le fait qu'ici le bloc de finition est une pièce massive, cubique ou oblongue ou encore parallélépipédique ou encore sphérique, permet d'y ajouter facilement des éléments ou d'y percer des trous pour créer des nouvelles fonctions utiles à l'utilisateur. Par exemple des aimants peuvent être ajoutés sur le bloc de finition pour solidariser l'appareillage selon l'invention à un support métallique ou pour solidariser entre eux plusieurs appareillages conformes à l'invention. En outre, le perçage de trous au travers du bloc de finition permet de l'équiper d'un lien, enfilé dans un trou, afin d'accrocher ou de suspendre l'appareillage selon l'invention à un quelconque support ou encore d'attacher cet appareillage à un autre appareillage du même type.

Enfin, avantageusement, le bloc de finition de l'appareillage conforme à l'invention, peut être préservé lors de toutes les étapes d'assemblage et/ou de fabrication de l'appareillage et être rapporté lors d'une étape finale de production ou lors d'une première utilisation ce qui permet d'éviter de l'abîmer en le rayant ou en le cognant, avant qu'il ne soit utilisé par l'utilisateur.

D'autres caractéristiques non limitatives et avantageuses de l'appareillage conforme à l'invention, prises individuellement ou selon toutes les combinaisons techniquement possibles, sont énoncées dans les revendications 2 à 22.

La description qui va suivre en regard des dessins annexés, donnés à titre d'exemples non limitatifs, fera bien comprendre en quoi consiste l'invention et comment elle peut être réalisée.

Sur les dessins annexés :
la figure 1 est une vue éclatée schématique partielle d'un premier mode de réalisation de l'appareillage conforme à l'invention,
la figure 2 est une vue schématique en perspective arrière du bloc de finition de l'appareillage de la figure 1,
la figure 3 est une vue schématique assemblée en perspective de trois quarts de l'appareillage de la figure 1 avec le bloc de finition de la figure 2 positionné au-dessus du socle, prêt à être rapporté sur la face avant de la paroi de fermeture de ce socle,
la figure 4 est une vue schématique en perspective de trois quarts de l'appareillage de la figure 3 au cours du montage du bloc de finition sur la paroi de fermeture du socle,
la figure 5 est une vue schématique en perspective de trois quarts de l'appareillage de la figure 3 dans un état final d'utilisation,
la figure 6 est une vue schématique en perspective de détail d'un coin du socle de l'appareillage de la figure 3 avec un pion de montage du bloc de finition positionné en regard de la partie circulaire d'une ouverture de montage de la paroi de fermeture dudit socle,
la figure 7 est une vue identique à celle de la figure 6 avec la tête du pion de montage engagée dans ladite partie circulaire de l'ouverture de montage,
la figure 8 est une vue identique à celle de la figure 6 avec le corps allongé du pion de montage coulissé jusqu'à l'autre extrémité de la partie allongée de ladite ouverture de montage,
la figure 9 est une vue en coupe selon le plan P de la figure 7,
la figure 10 est une vue en coupe similaire à celle de la figure 9 avec le pion de montage coulissé jusqu'à une partie médiane de la partie allongée de l'ouverture de montage ;
la figure 11 est une vue en coupe selon le plan P de la figure 8 ;
la figure 12 est une vue en coupe selon le plan A-A de la figure 11,
la figure 13 est une vue éclatée schématique partielle d'un deuxième mode de réalisation de l'appareillage conforme à l'invention,
la figure 14 est une vue schématique en perspective arrière du bloc de finition de l'appareillage de la figure 13,
la figure 15 est une vue schématique assemblée en perspective de trois quarts de l'appareillage de la figure 13 avec le bloc de finition de la figure 14 positionné au-dessus du socle, prêt à être rapporté sur la face avant de la paroi de fermeture de ce socle
la figure 16 est une vue schématique en perspective de trois quarts de l'appareillage de la figure 15 au cours du montage du bloc de finition sur la paroi de fermeture du socle,
la figure 17 est une vue schématique en perspective de trois quarts de l'appareillage de la figure 15 dans un état final d'utilisation,
la figure 18 est une vue arrière de la paroi de fermeture sur laquelle est montée l'enveloppe centrale logeant les mécanismes d'appareillage de l'appareillage de la figure 13,
la figure 19 est une vue en coupe selon le plan B de la figure 16,
la figure 20 est une vue en coupe similaire à celle de la figure 19 avec les pions de montage coulissés à mi-chemin dans les ouvertures de montage,
la figure 21 est une vue en coupe similaire à celle de la figure 19 avec les pions de montage coulissés jusqu'au bout des ouvertures de montage,
la figure 22 est une vue arrière de l'appareillage de la figure 17 avec son bloc de finition non verrouillé,
la figure 23 est une vue en coupe selon le plan A-A de la figure 22, et
la figure 24 est une vue similaire à celle de la figure 23 avec le bloc de finition verrouillé sur la paroi de fermeture.

Dans la description qui va suivre, par convention, le terme « avant » désignera le côté d'un élément décrit orienté vers un utilisateur lorsque cet élément est en position d'utilisation, tandis que le terme « arrière » désignera le côté opposé de cet élément.

Sur les figures on a représenté deux modes de réalisation d'un appareillage conforme à l'invention.

Ces deux modes de réalisation appartiennent au même type d'appareillage. Il s'agit ici de deux blocs mobiles de prise de courant.

Les deux modes de réalisation diffèrent l'un de l'autre par le fait que le premier mode de réalisation est un bloc monoposte alors que le deuxième mode de réalisation est un bloc multipostes, en particulier un bloc double postes.

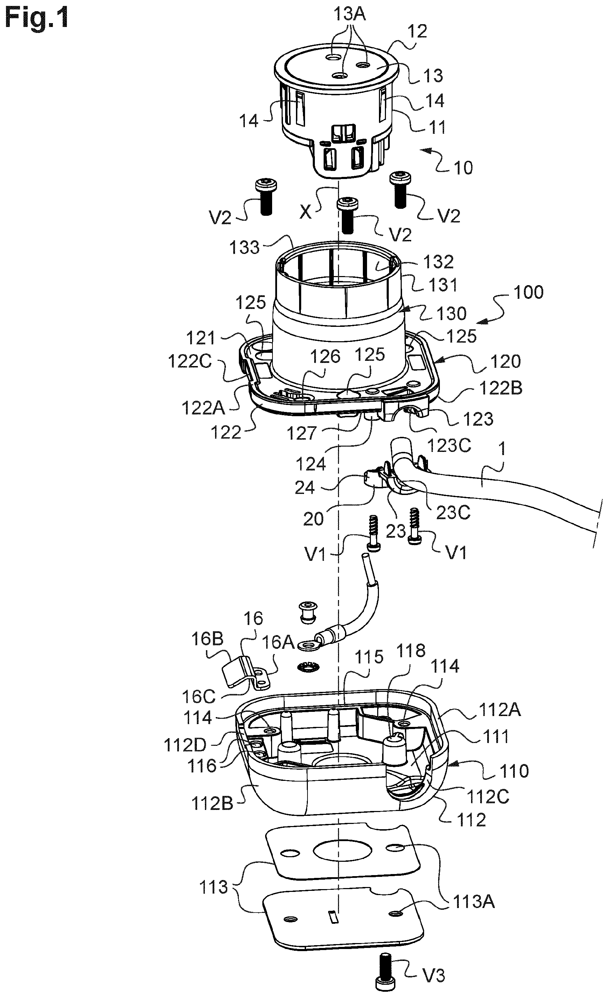

Quel que soit le mode de réalisation, comme le montrent les figures 1, 5, 13 et 17, l'appareillage 100 ; 200 comprend un boîtier qui enferme au moins un mécanisme d'appareillage 10 dont la partie fonctionnelle 13 est accessible à l'utilisateur sur une face avant 142A ; 242A dudit appareillage 100 ; 200.

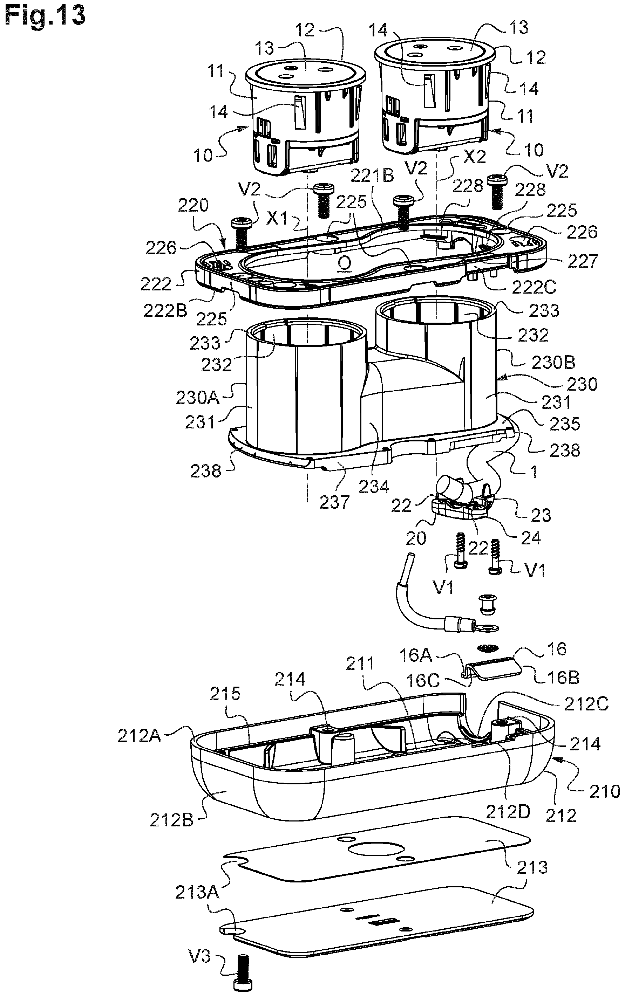

Selon le premier mode de réalisation représenté sur les figures 1 à 12, l'appareillage 100 comprend un seul mécanisme de prise de courant 10 alors que selon le deuxième de réalisation représenté sur les figures 13 à 24, l'appareillage 200 comprend deux mécanismes de prise de courant 10.

Chaque mécanisme de prise de courant 10 est ici un mécanisme classique du type franco-belge qui, pour l'essentiel, comprend un socle 11 enfermant trois bornes électriques, une borne de phase, une borne de neutre et une borne de terre raccordée à une broche de terre.

Le socle 11 est une enveloppe isolante réalisée en matière plastique. Il comporte une paroi latérale cylindrique qui, à l'avant, délimite un puits d'insertion d'une fiche électrique, et, à l'arrière, délimite un logement pour les bornes électriques.

A l'arrière, le socle 11 comporte des ouvertures d'accès aux bornes électriques. Des fils électriques provenant d'un câble d'alimentation 1 tiré du réseau électrique, sont introduits au travers de ces ouvertures arrière et connectés aux bornes électriques pour l'alimentation dudit mécanisme de prise de courant 10.

A l'avant, la paroi latérale cylindrique du socle 11 est bordée d'une collerette externe 12. En outre, il est prévu en saillie sur la face externe de la paroi latérale cylindrique du socle 11 des dents 14. La collerette externe 12 et les dents 14 forment des moyens de montage du socle 11 du mécanisme d'appareillage 10 dans le boîtier de l'appareillage 100 ; 200.

Le mécanisme de prise de courant 10 ici représenté est un mécanisme dont la paroi de fond 13 du puits d'insertion de la fiche électrique, est mobile entre une position d'attente dans laquelle cette paroi de fond 13 affleure la face avant 12A de ladite collerette externe 12, comme cela est représenté sur les figures 1, 7, 13 et 17, et une position d'utilisation dans laquelle elle est enfoncée par la fiche électrique insérée dans le puits. De manière connue, cette paroi de fond 13 est rappelée en permanence en position d'attente par un ressort interne (non visible sur les figures). Cette paroi de fond 13 est percée de trois ouvertures circulaires 13A (voir figure 1). Deux de ces trois ouvertures 13A donnent aux broches de la fiche électrique accès aux alvéoles des bornes de phase et de neutre du mécanisme de prise de courant 10 et la troisième ouverture 13A est traversée par la broche de terre du mécanisme de prise de courant 10 lors de l'enfoncement de la paroi de fond 13 pour que cette broche de terre s'insère dans l'alvéole de la borne de terre prévue dans la fiche électrique.

Ce mécanisme de prise de courant 10 étant bien connu en soi, il ne sera pas décrit plus en détails ici.

D'ailleurs, selon d'autres variantes non représentées de l'appareillage conforme à l'invention, on pourra prévoir d'autres standards de prises de courant, d'autres types de mécanisme d'appareillage comme un mécanisme de prise USB ou de prise RJ ou de prise téléphone ou de prise de courant dont le fond du puits est fixe ou encore un mécanisme de commutateur quelconque ou un mécanisme de commande quelconque.

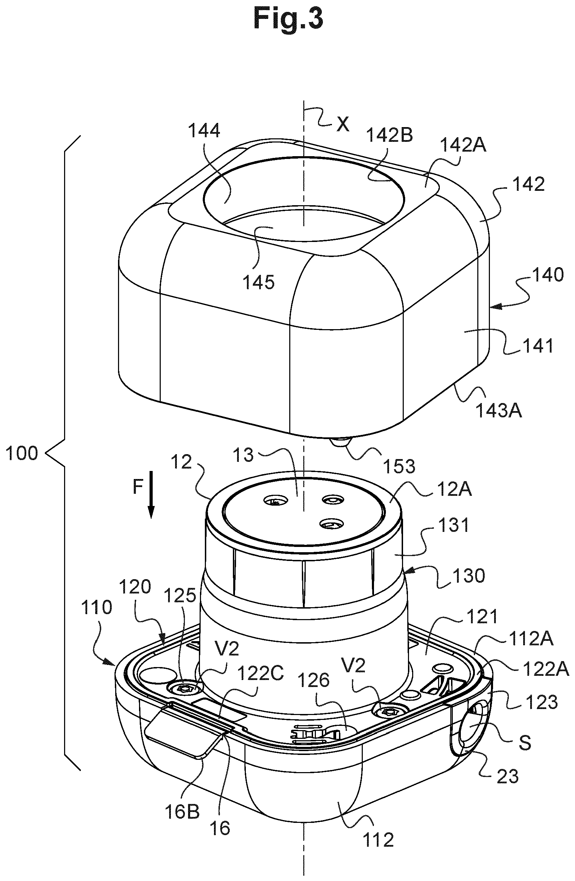

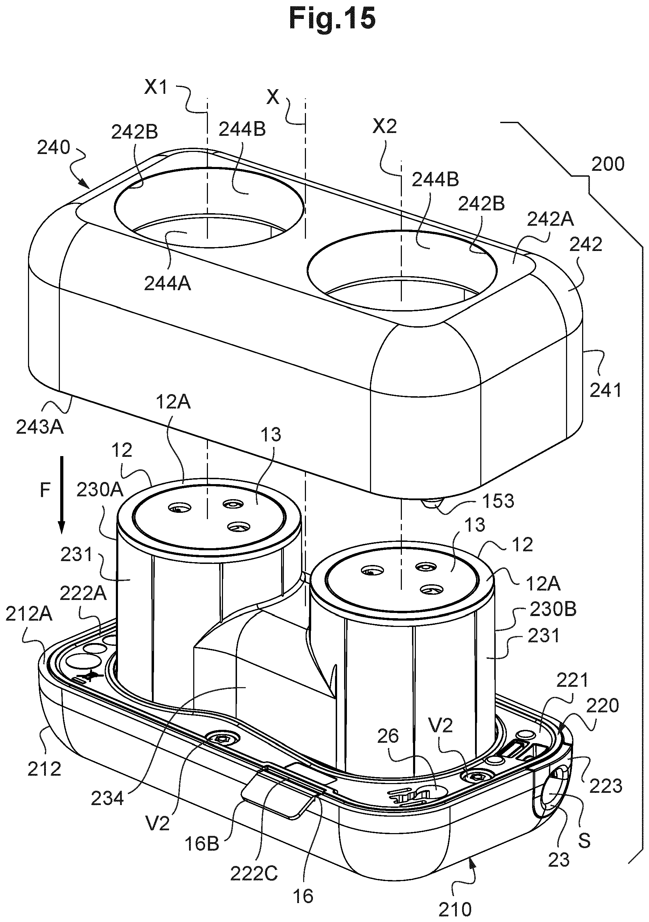

Comme le montrent plus particulièrement les figures 3 et 15, le boîtier de chaque appareillage 100 ; 200 comporte un socle 110 ; 210 fermé à l'avant par une paroi de fermeture 120 ; 220 autour d'une enveloppe centrale 130 ; 230 accueillant chaque mécanisme d'appareillage 10.

Comme le montrent les figures 1 et 13, le socle 110 ; 210 comporte une paroi de fond 111 ; 211 bordée par une paroi latérale 112 ; 212 périphérique. Le bord avant 112A ; 212A de la paroi latérale 112 ; 212 délimite l'ouverture avant du socle 110 ; 210. La paroi latérale 112, 212 du socle 110, 210 du boîtier présente une face externe 112B, 212B. Cette face externe 112B, 212B est visible aux usagers lors d'une utilisation normale de l'appareillage.

Le socle 110 ; 210 est par exemple réalisé par moulage d'une matière plastique.

Selon le premier mode de réalisation représenté sur la figure 1, la paroi latérale 112 suit un contour carré aux coins arrondis si bien que le socle 110 présente la forme externe d'une boîte carrée aux coins arrondis.

Selon le deuxième mode de réalisation représenté sur la figure 13, la paroi latérale 212 suit un contour rectangulaire aux coins arrondis si bien que le socle 210 présente la forme externe d'une boîte rectangulaire aux coins arrondis.

Bien entendu selon d'autres variantes non représentées de l'appareillage conforme à l'invention, on pourrait prévoir d'autres formes de socle comme une forme hémisphérique ou oblongue.

Deux plaques externes 113 ; 213 (une plaque adhésive et une plaque élastomère) sont rapportées à l'arrière du socle 110 ; 210 et forment ici une surface d'appui par laquelle le socle 110 ; 210 peut être posé sur une quelconque paroi de réception.

La paroi latérale 112 ; 212 du socle 110 ; 210 porte sur sa face interne, à distance de son bord avant 112A ; 212A, un trottoir 115 ; 215 qui suit le contour du bord avant 112A ; 212A de ladite paroi latérale 112 ; 212. Il est également prévu à l'intérieur du socle 110 ; 210 trois cheminées 114 ; 214 au conduit taraudé qui s'élèvent à partir du fond 111 ; 211 dudit socle 110 ; 210 jusqu'au niveau du trottoir 115 ; 215.

Le bord avant 112A ; 212A de la paroi latérale 112 ; 212 comporte une profonde encoche 112C ; 212C qui s'étend sur pratiquement toute la hauteur de ladite paroi latérale 112 ; 212 de sorte que le fond circulaire de cette encoche 112C ; 212C est situé au niveau du fond 111 ; 211 du socle 110 ; 210.

Comme le montrent les figures 1, 4 et 13, cette profonde encoche 112C ; 212C accueille dans son fond circulaire une bride semi circulaire 23 d'un dispositif de maintien 20 d'une extrémité du câble d'alimentation 1 entrant dans le socle 110 ; 210. Cette bride semi circulaire 23 forme un berceau semi circulaire 23C réceptionnant une partie de la gaine isolante du câble d'alimentation 1. La bride semi circulaire 23 est liée à un plot de montage 24 percé de deux orifices 22 au travers desquels sont enfilés les corps filetés de deux vis V1 pour la fixation du dispositif de maintien 20 à la paroi de fermeture 120 ; 220 du socle 110 ; 210 du boîtier de l'appareillage 100 ; 200.

Le bord avant 112A ; 212A de la paroi latérale 112 ; 212 comporte une autre encoche 112D ; 212D de faible profondeur dont le fond est plat ou droit. Cette autre encoche 112D ; 212D accueille une partie coudée 16C d'un élément de marquage 16. Cet élément de marquage 16 est une petite pièce de faible épaisseur qui comporte une plate-forme de montage 16A percée de deux orifices et reliée par la partie coudée 16C à une languette 16B plate formant un support de marquage.

Cet élément de marquage 16 est positionné à cheval sur le bord avant 112A ; 212A de la paroi latérale 112 ; 212 de sorte que :
- la plate forme de montage 16A se place dans le socle 110 ; 210, juste en dessous du trottoir 115 ; 215, avec ses deux orifices en regard des entrées de deux conduits de vissage 116 prévus dans le socle 110 (voir figure 1),
- la partie coudée 16C se place dans l'encoche 112D ; 212D, et
- la languette 16B s'étend à l'extérieur du socle 110 ; 210 en porte-à-faux du bord avant 112A ; 212A de la paroi latérale 112 ; 212 dudit socle 110 ; 210 (voir figures 3, 4, 5, 6, 7, 8, 15, 16, 17).

L'élément de marquage 16 est fixé au socle 110 ; 210 de l'appareillage 100 ; 200 au moyen de vis (non représentées sur les figures) vissées au travers des orifices de la plate forme de montage 16A dans les conduits de vissage 116 prévus dans le socle 110.

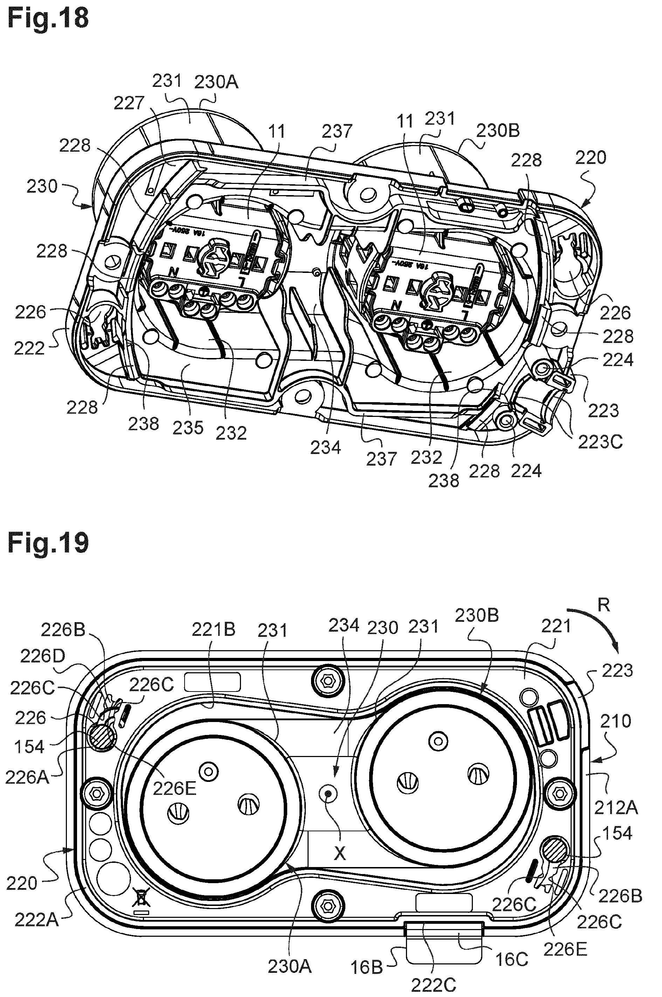

Comme le montrent les figures 1 et 13, la paroi de fermeture 120 ; 220 est une pièce monobloc qui présente une plaque de fermeture 121 ; 221 bordée extérieurement par un bandeau 122 ; 222. Le bandeau 122 ; 222 suit un contour identique à celui du bord avant 112A ; 212A de la paroi latérale 112 ; 212 du socle 110 ; 210. Il présente une tranche avant 122A ; 222A et une tranche arrière 122B ; 222B. Le bandeau 122 ; 222 comporte une encoche latérale 122C ; 222C à fond plat ou droit. Il porte latéralement un élément de maintien 123 ; 223 du câble d'alimentation 1 (voir figures 1 et 18). Cet élément de maintien 123 ; 223 forme une arche semi circulaire 123C ; 223C destinée s'appliquer autour de la gaine isolante du câble d'alimentation 1.

Comme le montrent plus particulièrement les figures 1 et 18, la plaque de fermeture 121 ; 221 porte sur sa face arrière 127 ; 227 deux cheminées 124 ; 224 aux conduits taraudés placées à proximité de l'élément de maintien 123 ; 223 de part et d'autre de l'arche semi circulaire 123C ; 223C.

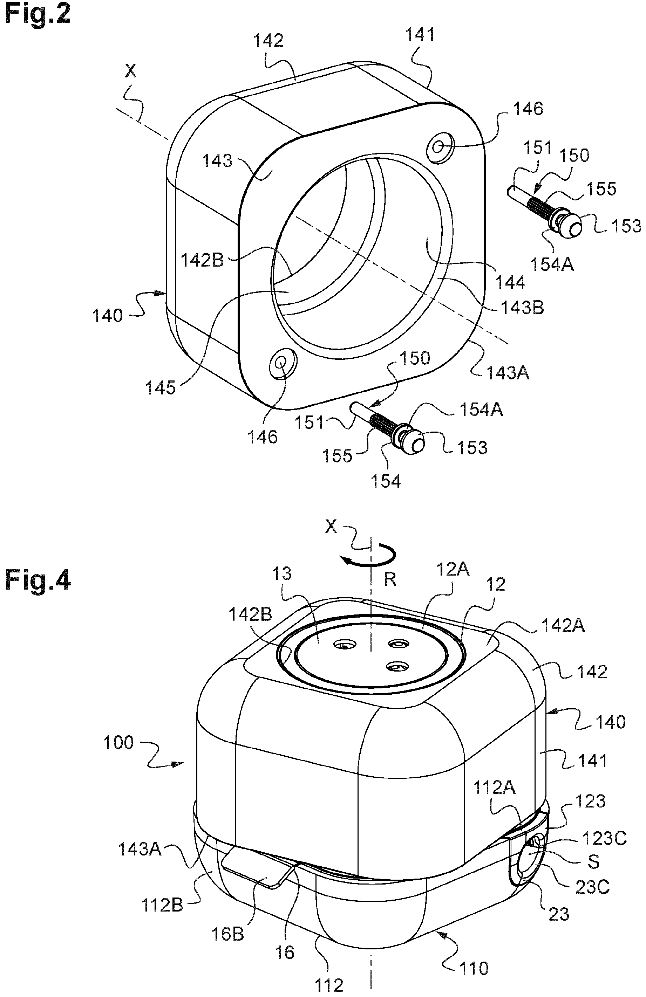

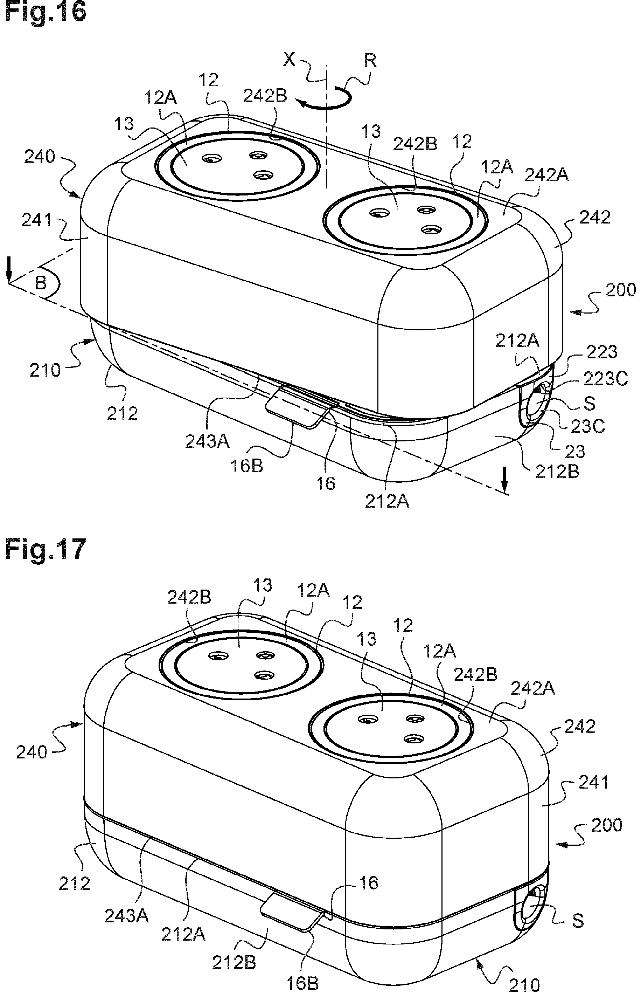

Les vis V1 qui traversent les orifices 22 du plot de montage 24 du dispositif de maintien 20 sont vissées dans les conduits taraudés de ces cheminées 124 ; 224 pour fixer ce dispositif de maintien 20 à la paroi de fermeture 120 ; 220 en correspondance dudit élément de maintien 123 ; 223. Le dispositif de maintien 20 et l'élément de maintien 123 ; 223 placés en concordance forment une entrée S circulaire pour l'extrémité du câble d'alimentation 1. Plus particulièrement, le berceau semi circulaire 23C de la bride semi circulaire 23 du dispositif de maintien 20 se place en regard de l'arche semi circulaire 123C ; 223C de la paroi de fermeture 120 ;220 pour former ladite entrée S circulaire (voir figures 4 et 16 par exemple).

La plaque de fermeture 121 ; 221 est par ailleurs percée de plusieurs orifices 125 ; 225 pour sa fixation au socle 110 ; 210.

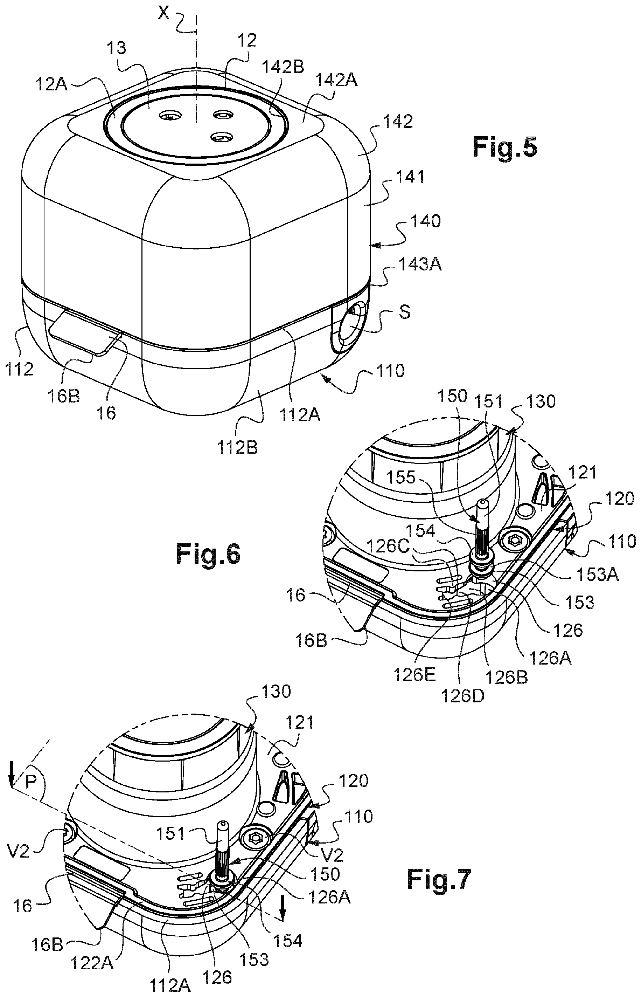

Comme le montrent plus particulièrement les figures 3 et 15, la paroi de fermeture 120 ; 220 est placée dans le socle 110 ; 210 de sorte que, d'une part, la tranche arrière 122B ; 222B de son bandeau 122 ; 222 repose sur le trottoir 115 ; 215 prévu sur la face interne de la paroi latérale 112 ; 212 du socle 110 ; 210, et, d'autre part, la tranche avant 122A ; 222A de ce bandeau 122 ; 222 jouxte le bord avant 112A ; 212A de la paroi latérale 112 ; 212 du socle 110 ; 210 (voir les figures 6, 7, 8, 19, 20, 21).

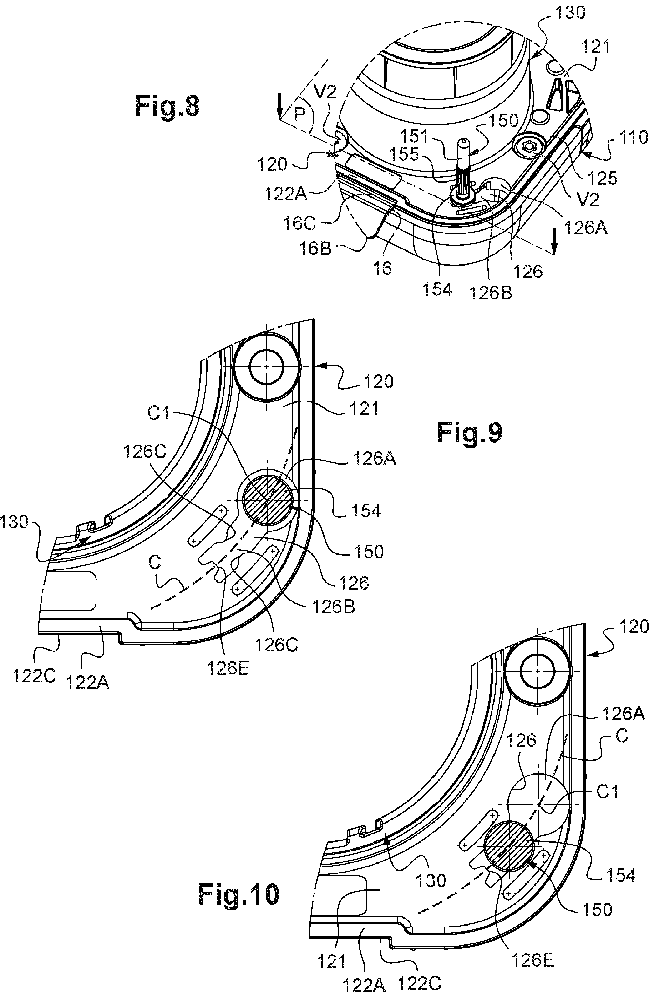

L'encoche latérale 122C ; 222C du bandeau 122 ; 222 ainsi positionnée, contourne la partie coudée 16C de l'élément de marquage 16 (voir figures 8, 19, 20, 21).

La plaque de fermeture 121 ; 221 de la paroi de fermeture 120 ;220 ferme alors l'ouverture avant du socle 110 ; 210 autour de l'enveloppe centrale 130 ; 230.

L'élément de maintien 123 ; 223 associé au dispositif de maintien 20 fixé à la paroi de fermeture 120 ; 220 se place dans la profonde encoche 112C ; 212C de la paroi latérale 112 ; 212 du socle 110 ; 210 du boîtier de l'appareillage 100 ; 200 (voir figures 3 et 15).

Les orifices 125 ; 225 de la plaque de fermeture 121 ; 221 de la paroi de fermeture 120 ; 220, se positionnent au droit des conduits taraudés des cheminées 114 ; 214 du socle 110 ; 210 et des vis V2 sont vissées dans ces conduits taraudés au travers des orifices 125 ; 225 pour fixer la paroi de fermeture 120 ; 220 au socle 110 ; 210 du boîtier de l'appareillage 100 ; 200.

Comme le montrent plus particulièrement les figures 3 et 15, quel que soit le mode de réalisation représenté, l'enveloppe centrale 130 ; 230 du boîtier de l'appareillage 100 ; 200 s'élève sur une certaine hauteur au-dessus de la face avant de la plaque de fermeture 121 ; 221 de ladite paroi de fermeture 120 ; 220 selon une direction X perpendiculaire à celle-ci si bien que la partie fonctionnelle 13 de chaque mécanisme d'appareillage 10, logé dans ladite enveloppe centrale 130 ; 230, est située en hauteur au-dessus de la face avant de la paroi de fermeture 120 ; 220.

Selon le premier mode de réalisation de l'appareillage 100 représenté sur les figures 1 à 12, l'enveloppe centrale 130 et la paroi de fermeture 120 sont fixes l'une par rapport à l'autre. L'enveloppe centrale 130 et la paroi de fermeture 120 appartiennent à une seule pièce monobloc réalisée par exemple en matière plastique moulée.

Selon ce mode de réalisation, comme le montrent plus particulièrement les figures 1 et 3, l'enveloppe centrale 130 comporte une unique enveloppe cylindrique 131 de section circulaire autour d'un axe central X perpendiculaire à la face avant de la plaque de fermeture 121 de ladite paroi de fermeture 120. La face interne 132 de cette enveloppe cylindrique 131 définit un logement d'accueil du seul mécanisme d'appareillage 10. Plus particulièrement, le socle 11 du mécanisme de prise de courant 10 est introduit par l'avant dans le logement d'accueil de l'enveloppe centrale 130 de sorte que sa paroi latérale cylindrique jouxte la face interne 132 de cette enveloppe cylindrique 131 et que la collerette externe 12 de ce socle 11 repose sur le bord avant 133 de l'enveloppe cylindrique 131 avec la paroi de fond 13 de son puits en position d'attente qui s'étend à effleurement de la face avant 12A de cette collerette externe 12. Les dents 14 prévues en saillies de la paroi latérale cylindrique du socle 11 du mécanisme de prise de courant 10, s'accrochent sur des aménagements complémentaires (non référencées sur les figures) prévus sur la face interne 132 de l'enveloppe cylindrique 131. Une fois monté dans l'enveloppe centrale 130, comme le montre la figure 3, la face avant de la partie fonctionnelle du mécanisme de prise de courant 10, constituée ici par la face avant de la paroi de fond 13 du puits de la prise de courant, en position d'attente, est située en hauteur au-dessus de la plaque de fermeture 121 de la paroi de fermeture 120 du boîtier de l'appareillage 100.

Selon le deuxième mode de réalisation de l'appareillage 200 représenté sur les figures 13 à 24, l'enveloppe centrale 230 et la paroi de fermeture 220 sont mobiles en rotation l'une par rapport à l'autre autour d'un axe central X.

Selon ce mode de réalisation, comme le montrent plus particulièrement les figures 13, 15 et 18, l'enveloppe centrale 130 appartient à une pièce intermédiaire, réalisée par exemple en matière plastique moulée, comportant une base 235 à partir de laquelle s'élève ladite enveloppe centrale 230. Cette base 235 est une plaque comportant deux bords longitudinaux externes 237 reliés aux extrémités par deux bords courbes 238 diamétralement opposés.

En correspondance, la plaque de fermeture 221 de la paroi de fermeture 220 comporte une ouverture centrale O délimitée par un bord interne 221B. Ce bord interne 221B suit un contour en forme de haricot. Il comporte alors deux parties courbes d'extrémité diamétralement opposées. Le long de ces deux parties courbes d'extrémité du bord interne 221B, la plaque de fermeture 221 porte sur sa face arrière 227 des pattes munies de dents 228 qui définissent deux rainures courbes diamétralement opposées.

Comme le montre la figure 18, la base 235 de la pièce intermédiaire est introduite dans l'ouverture centrale O de la plaque de fermeture 221, sous celle-ci, de sorte que les deux bords courbes 238 de cette base 235 sont montés glissants dans les deux rainures courbes 228 correspondantes prévues dans la plaque de fermeture 221 de ladite paroi de fermeture 220.

Comme le montre la figure 15, lorsque la base 235 est montée dans la paroi de fermeture 220, l'enveloppe centrale 230 émerge de l'ouverture centrale O en s'élevant selon l'axe central X au-dessus de la plaque de fermeture 221.

L'enveloppe centrale 230 comporte deux cheminées 230A, 230B formées par deux enveloppes cylindriques 231 d'axes X1, X2 parallèles à l'axe centrale X, chaque enveloppe cylindrique 231 étant adaptée à accueillir un seul mécanisme d'appareillage 10. Chaque enveloppe cylindrique 231 présente une section circulaire autour de son axe central X1, X2 perpendiculaire à la face avant de la plaque de fermeture 221 de ladite paroi de fermeture 220. La face interne 232 de chaque enveloppe cylindrique 231 définit un logement d'accueil du seul mécanisme d'appareillage 10. Les deux logements d'accueil des deux enveloppes cylindriques 231, sont réunis par une partie centrale 234 qui forme une sorte de tunnel entre les deux logements d'accueil.

Plus particulièrement, le socle 11 de chaque mécanisme de prise de courant 10 est introduit par l'avant dans chaque logement d'accueil de l'enveloppe centrale 230 de sorte que sa paroi latérale cylindrique jouxte la face interne 232 de l'enveloppe cylindrique 231 correspondante et que la collerette externe 12 de chaque socle 11 repose sur le bord avant 233 de l'enveloppe cylindrique 231 correspondante avec la paroi de fond 13 de son puits en position d'attente qui s'étend à effleurement de la face avant 12A de cette collerette externe 12 (voir figure 15). Les dents 14 prévues en saillies de la paroi latérale cylindrique du socle 11 de chaque mécanisme de prise de courant 10, s'accrochent sur des aménagements complémentaires (non référencées sur les figures) prévus sur la face interne 232 de l'enveloppe cylindrique 231 correspondante. Une fois monté dans l'enveloppe centrale 230, comme le montre la figure 15, la face avant des parties fonctionnelles des deux mécanismes de prise de courant 10, constituées ici par la face avant des parois de fond 13 des puits des prises de courant, en position d'attente, sont situées en hauteur au-dessus de la plaque de fermeture 221 de la paroi de fermeture 220 du boîtier de l'appareillage 200.

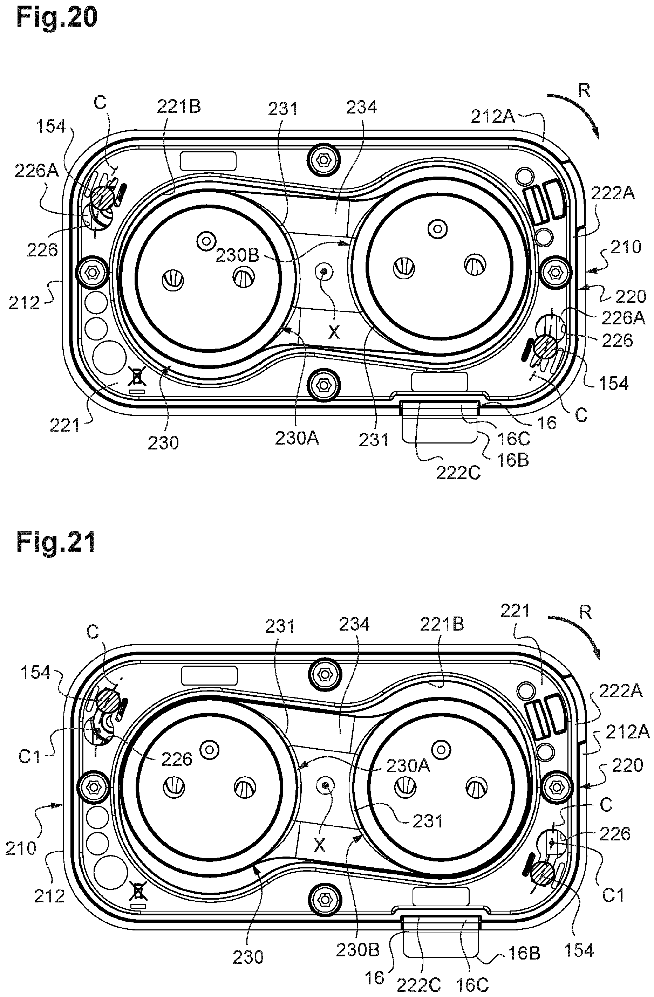

Comme le montrent les figures 19 à 21, grâce au montage de la base 235 de la pièce intermédiaire dans les moyens de rainure de la paroi de fermeture 220, l'enveloppe centrale 230 (qui appartient à cette pièce intermédiaire) est déplaçable à rotation autour de l'axe centrale X entre deux positions extrêmes selon la flèche R. La première position extrême est représentée sur la figure 19 tandis que la deuxième position extrême est représentée sur la figure 21.

De manière remarquable, comme le montrent notamment les figures 3, 5, 15 et 17, dans chacun des appareillages 100, 200, il est prévu un bloc de finition 140 ; 240 à rapporter de manière amovible sur la face avant de ladite paroi de fermeture 120 ; 220 autour de ladite enveloppe centrale 130 ; 230 du boîtier. Le bloc de finition 140 ; 240 présente une forme massive avec une face arrière 143 ; 243, une face avant 142, 142A ; 242, 242A, une face latérale externe 141, 241 s'étendant entre les faces arrière et avant, et une face latérale interne 144 ; 244 qui délimite un logement central 145 ; 244A, 244B traversant qui débouche sur les faces arrière 143 ; 243 et avant 142A ; 242A.

D'une part les dimensions dudit logement central 145 ; 244A,244B du bloc de finition 140 ; 240 correspondent au jeu près aux dimensions externes de l'enveloppe centrale 130 ; 230 du boîtier de l'appareillage 100 ; 200, et, d'autre part, la surface de ladite face arrière 143 ; 243 du bloc de finition 140 ; 240 est prévue si bien que lorsque le bloc de finition 140 ; 240 est rapporté sur la face avant de ladite paroi de fermeture 120 ; 220 du socle 110 ; 210 du boîtier de l'appareillage 100 ; 200, la face arrière 143 ; 243 dudit bloc de finition 140 ; 240 recouvre la face avant de ladite paroi de fermeture 120 ; 220, la face latérale externe 141, 241 dudit bloc de finition 140, 240 s'étend dans le prolongement de la face externe 112B, 212B de la paroi latérale 112, 212 du socle 110, 210 du boîtier et la face latérale interne 144 ; 244 de ce bloc de finition 140 ; 240 s'ajuste autour de la surface périphérique externe de l'enveloppe centrale 130 ; 230 du boîtier de sorte que la face avant 142, 142A ; 242, 242A dudit bloc de finition 140 ; 240 s'étend autour de la partie fonctionnelle 12, 13 de chaque mécanisme d'appareillage 10 en formant ainsi la face avant dudit appareillage 100 ; 200.

Il convient de préciser qu'au moins une partie 142A, 242A de la face avant du bloc de finition 140, 240 s'étend à effleurement d'au moins une partie fixe 12A de la face avant de la partie fonctionnelle 12, 13 du mécanisme d'appareillage 10 ou de chaque mécanisme d'appareillage 10.

Avantageusement, le bloc de finition 140 ; 240 est réalisé dans une ou plusieurs matières choisies parmi la matière synthétique, le bois brut ou aggloméré, la matière métallique, le béton, la pierre brute ou reconstituée, le cuir, le textile tissé ou non tissé.

Selon le premier mode de réalisation de l'appareillage 100 représenté sur les figures 2 et 3, le bloc de finition 140 présente ici la forme externe d'une partie de cube aux coins arrondis qui est destinée à compléter la forme externe cubique du socle 110 du boîtier de l'appareillage 100 pour former avec celui-ci une forme externe cubique aux coins arrondis.

La face arrière 143 de ce bloc de finition 140 présente un contour externe carré 143A aux coins arrondis, identique à celui du bord avant 112A de la paroi latérale 112 du socle 110 du boîtier de l'appareillage 100 si bien que lorsque le bloc de finition 140 est monté sur ladite paroi de fermeture 120, ladite face arrière 143 du bloc de finition 140 et la paroi latérale 112 du socle 110 du boîtier de l'appareillage 100 sont positionnées bord à bord (voir figure 5).

Le bloc de finition 140 est percé d'un conduit cylindrique 145 à section circulaire centrée sur l'axe central X. La section circulaire du conduit cylindrique 145 est identique au jeu près à la section circulaire externe de l'enveloppe cylindrique 131 de l'enveloppe centrale 130 du boîtier de l'appareillage 100. Ce conduit cylindrique 145 débouche sur les faces avant et arrière 142A, 143 du bloc de finition 140 ; 240 par des ouvertures circulaires 142B, 143B. Lorsque le bloc de finition 140 est monté sur ladite paroi de fermeture 120, le bord de l'ouverture circulaire 142B avant du conduit cylindrique 145 du bloc de finition 140 longe le bord externe de la collerette externe 12 du socle 11 du mécanisme d'appareillage 10 monté dans l'enveloppe centrale 130 du boîtier de l'appareillage 100 (voir figures 4 et 5).

Extérieurement, comme le montrent les figures 2 et 3, à partir du bord externe 143A de sa face arrière 143, le bloc de finition 140 présente une face latérale 141 avec quatre panneaux reliés par quatre portions de surface arrondie puis une face avant arrondie 142 avec, à l'avant, un méplat 142A sur lequel débouche le conduit cylindrique 145 par son ouverture circulaire 142B. Ainsi, la face avant du bloc de finition 140 est ici constituée de la face avant arrondie 142 et du méplat 142A situé au sommet de cette face avant arrondie 142.

La hauteur de la face latérale 141 externe du bloc de finition 140 est supérieure à la hauteur de la paroi latérale 112 du socle 110 sur lequel est rapporté ledit bloc de finition 140. Globalement, le bloc de finition 140 présente une forme massive dont le volume hors tout représente une partie importante du volume hors tout de l'appareillage 100.

Comme le montre la figure 5, lorsque le bloc de finition 140 est rapporté sur la paroi de fermeture 120, la face latérale 141 externe de ce bloc de finition 140 s'étend dans le prolongement de la face externe 112B de la paroi latérale 112 du socle 110 du boîtier de l'appareillage 100 et le méplat 142A s'étend à effleurement de la face avant 12A de la collerette externe 12 du socle 11 du mécanisme d'appareillage 10 monté dans l'enveloppe centrale 130 du boîtier de l'appareillage 100. La face avant arrondie 142 avec son méplat 142A du bloc de finition 140, au centre de laquelle apparaît la partie fonctionnelle (paroi de fond 13 entourée de la face avant 12A de la collerette externe 12) du mécanisme d'appareillage 10, forme alors la face avant de l'appareillage 100.

On notera avantageusement sur la figure 5, qu'une fois rapporté sur le socle 110, le bloc de finition 140 masque complètement la paroi de fermeture 120, il forme avec le socle 110 un volume unique avec une face latérale externe (formée par la face latérale 141 externe du bloc de finition s'étendant dans le prolongement de la face externe 112B de la paroi latérale 112 du socle 110 du boîtier) sur laquelle débouche l'entrée S du câble d'alimentation et sur laquelle fait saillie la languette 16B de l'élément de marquage 16. La face avant de ce volume unique donne accès à la partie fonctionnelle 13 du mécanisme d'appareillage.

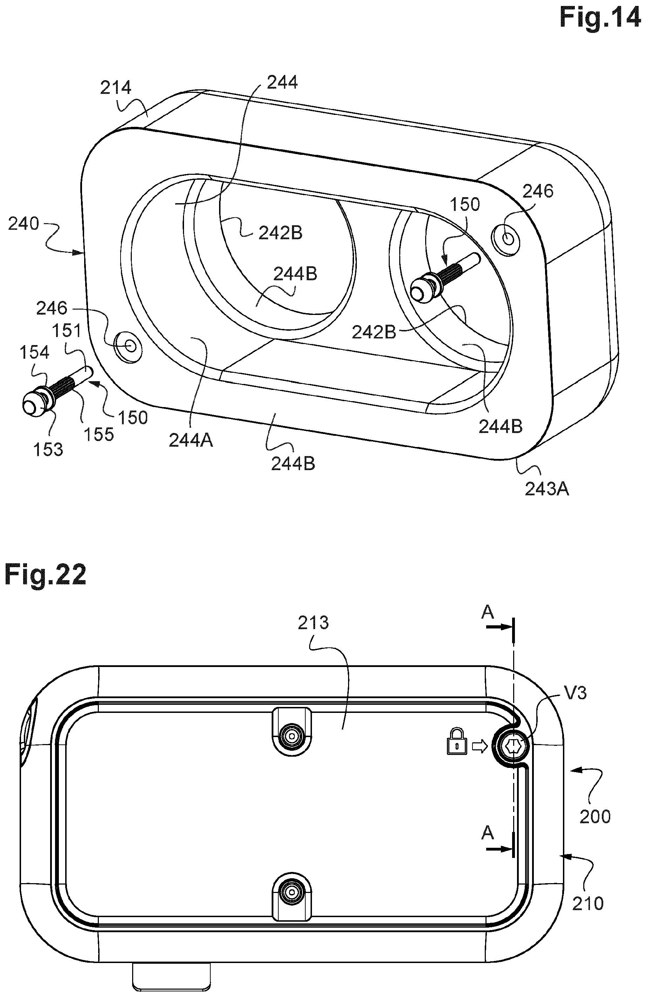

Selon le deuxième mode de réalisation de l'appareillage 200 représenté sur les figures 14 et 15, le bloc de finition 240 présente ici la forme externe d'une partie de bloc rectangulaire aux coins arrondis qui est destinée à compléter la forme externe rectangulaire du socle 210 du boîtier de l'appareillage 200 pour former avec celui-ci une forme externe parallélépipédique rectangle aux coins arrondis.

La face arrière 243 de ce bloc de finition 240 présente un contour externe rectangulaire 243A aux coins arrondis, identique à celui du bord avant 212A de la paroi latérale 212 du socle 210 du boîtier de l'appareillage 200 si bien que lorsque le bloc de finition 240 est monté sur ladite paroi de fermeture 220, ladite face arrière 243 du bloc de finition 240 et la paroi latérale 212 du socle 210 du boîtier de l'appareillage 200 sont positionnées bord à bord (voir figure 17).

Le bloc de finition 240 est percé de deux conduits cylindriques 244B à section circulaire, centrés sur les axes X1 et X2 des enveloppes cylindriques 231 des cheminées 230A, 230B de l'enveloppe centrale 230 du boîtier de l'appareillage 200 (voir figure 15). La section circulaire de chaque conduit cylindrique 244B est identique au jeu près à la section circulaire externe de l'enveloppe cylindrique 231 de chaque cheminée 230A, 230B de l'enveloppe centrale 230 du boîtier de l'appareillage 200. Chaque conduit cylindrique 244B débouche sur la face avant 242A du bloc de finition 240 par une ouverture circulaire 242B et il débouche à l'arrière par une ouverture circulaire sur un logement interne 244A au contour oblong (voir figure 14). Ce logement interne 244A du bloc de finition 240 débouche sur la face arrière 243 du bloc de finition 240 par une ouverture oblongue 243B.

Lorsque le bloc de finition 240 est rapporté sur ladite paroi de fermeture 220, le bord de l'ouverture circulaire 242B avant de chaque conduit cylindrique 244B du bloc de finition 240 longe le bord externe de la collerette externe 12 du socle 11 de chaque mécanisme d'appareillage 10 monté dans chaque cheminée 230A, 230B de l'enveloppe centrale 230 du boîtier de l'appareillage 200 (voir figures 16 et 17).

Extérieurement, comme le montrent les figures 14 et 15, à partir du bord externe 243A de sa face arrière 243, le bloc de finition 240 présente une face latérale 241 avec quatre panneaux reliés par quatre portions de surface arrondie puis une face avant arrondie 242 avec, à l'avant, un méplat 242A sur lequel débouche chaque conduit cylindrique 244B par son ouverture circulaire 242B. Ainsi, la face avant du bloc de finition 240 est ici constituée de la face avant arrondie 242 et du méplat 242A situé au sommet de cette face avant arrondie 242.

La hauteur de la face latérale 241 externe du bloc de finition 240 est supérieure à la hauteur de la paroi latérale 212 du socle 210 sur lequel est rapporté ledit bloc de finition 240. Globalement, le bloc de finition 240 présente une forme massive dont le volume hors tout représente une partie importante du volume hors tout de l'appareillage 200.

Comme le montre la figure 17, lorsque le bloc de finition 240 est rapporté sur la paroi de fermeture 220, la face latérale 241 externe de ce bloc de finition 240 s'étend dans le prolongement de la face externe 212B de la paroi latérale 212 du socle 210 du boîtier de l'appareillage 100 et le méplat 242A s'étend à effleurement de la face avant 12A de la collerette externe 12 du socle 11 de chaque mécanisme d'appareillage 10 monté dans l'enveloppe centrale 230 du boîtier de l'appareillage 200. La face avant arrondie 242 avec son méplat 242A du bloc de finition 240 au centre duquel apparaissent les parties fonctionnelles (paroi de fond 13 entourée de la face avant 12A de la collerette externe 12) des mécanismes d'appareillage 10, forme la face avant de l'appareillage 200.

On notera avantageusement sur la figure 17, qu'une fois rapporté sur le socle 210, le bloc de finition 240 masque complètement la paroi de fermeture 220, il forme avec le socle 210 un volume unique avec une face latérale externe (formée par la face latérale 241 externe du bloc de finition s'étendant dans le prolongement de la face externe 212B de la paroi latérale 212 du socle 210 du boîtier) sur laquelle débouche l'entrée S du câble d'alimentation et sur laquelle fait saillie la languette 16B de l'élément de marquage 16. La face avant de ce volume unique donne accès aux parties fonctionnelles 13 des mécanismes d'appareillage.

Selon les deux modes de réalisation représentés sur les figures, il est prévu des moyens de montage 150, 126 ;226 qui interviennent entre le bloc de finition 140 ; 240 et la paroi de fermeture 120 ; 220 du socle 110 ; 210, pour autoriser le montage du bloc de finition 140 ; 240 sur la paroi de fermeture 120 ; 220 selon un mouvement séquentiel comprenant une translation selon la flèche F parallèle à un axe central X perpendiculaire à ladite face avant de ladite paroi de fermeture 120 ; 220 (voir figures 3 et 15) puis une rotation selon la flèche R autour dudit axe central X (voir figures 4 et 16).

Lesdits moyens de montage 150, 126 ; 226 comprennent ici des moyens d'emboîtement et de coulissement.

Selon une autre variante non représentée, on pourrait envisager des moyens de montage qui interviennent entre le bloc de finition et la paroi de fermeture pour autoriser le montage du bloc de finition sur la paroi de fermeture selon un mouvement unique de translation. Les moyens de montage seraient alors des moyens de coulissement ou des moyens d'emboîtement.

En outre, il est prévu des moyens de verrouillage V3 du bloc de finition 140 ; 240 en place dans sa position finale sur la face avant de la paroi de fermeture 120 ; 220.

Comme cela sera décrit plus en détail ultérieurement, ces moyens de verrouillage V3 agissent directement sur les moyens de montage 150.

Plus particulièrement, lesdits moyens de montage comprennent, d'une part, au moins un pion 150 comportant un corps 151 cylindrique dont une extrémité libre est équipée d'une tête 153, et, d'autre part, au moins une ouverture 126 ; 226 en forme de trou de serrure apte à accueillir ledit pion 150, cette ouverture présentant une partie allongée 126B s'étendant selon un arc de cercle C centré sur ledit axe central X et dont une extrémité s'ouvre sur une partie circulaire 126A ; 226A dont le centre C1 est situé sur ledit arc de cercle C (voir les figures 9 à 11 et 19 à 21).

Ici, selon les deux modes de réalisation représentés, lesdits moyens de montage comprennent deux pions 150 positionnés de manière diamétralement opposée par rapport à l'axe central X et, en correspondance, deux ouvertures 126 ; 226 positionnées sur un cercle C centré sur ledit axe central X (voir figures 2, 11, 21).

Ici, selon les deux modes de réalisation représentés, chaque pion 150 est fixé au bloc de finition 140 ; 240 de façon à faire saillie de la face arrière 143 ; 243 de celui-ci et chaque ouverture 126 ; 226 correspondante est prévue dans l'épaisseur de la plaque de fermeture 121 ; 221 de ladite paroi de fermeture 120 ; 220 et débouche sur la face avant de celle-ci (voir figures 2, 3, 14, 15, 19 à 21).

Bien entendu, selon une variante non représentée, on pourrait prévoir l'inverse, à savoir, que les pions soient fixés à la paroi de fermeture et que les ouvertures d'accueil de ces pions soient prévues dans la face arrière du bloc de finition.

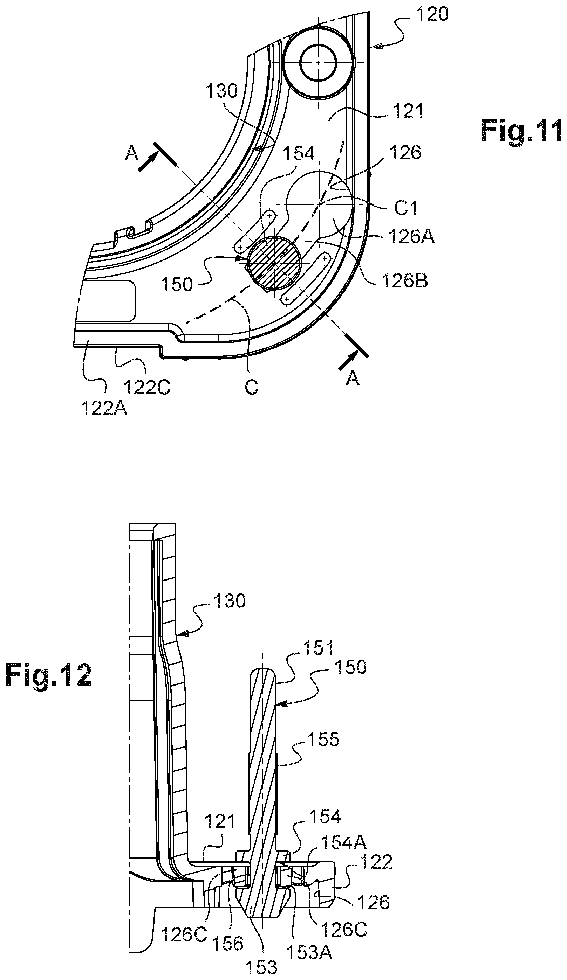

Comme le montrent plus particulièrement les figures 2 et 14, chaque pion 150 comporte un corps 151 allongé cylindrique qui comporte sur une partie de sa surface externe cylindrique un agencement de friction 155 comme des stries. A une extrémité libre de ce corps 151 allongé cylindrique est prévue une tête 153 de forme tronconique et une rondelle 154 annulaire s'étendant autour du corps 151. La tête tronconique 153 présente une face annulaire 153A entourant le corps 151 qui présente un diamètre externe identique au diamètre externe de la rondelle 154 annulaire. Une rainure est définie entre une face 154A de la rondelle 154 annulaire et la face annulaire 153A de la tête 153 tournée vers ladite rondelle 154 (voir figure 12). Le fond de cette rainure est formé par une partie de la surface externe cylindrique du corps 151.

Chaque pion 150 peut être réalisé par décolletage d'une barre métallique ou par moulage d'une matière métallique ou plastique.

Le bloc de finition 140 ; 240 présente deux conduits 146 ; 246 de réception des pions 150, qui débouchent sur la face arrière 143 ; 243 dudit bloc 140 ; 240 (voir figures 3 et 14). Le corps 151 de chaque pion 150 est enfoncé à force dans un conduit 146 ; 246 jusqu'à ce que la rondelle 154 se place au fond de l'embouchure de ce conduit à effleurement de la face arrière 143 ; 243 du bloc de finition 140 ; 240. Chaque pion 150 est maintenu dans le conduit 146 ; 246 grâce à l'agencement de friction 155 qui s'accroche sur la paroi dudit conduit 146 ; 246. Une fois que le corps 151 de chaque pion 150 est enfoncé dans le conduit 146 ; 246 correspondant du bloc de finition 140 ; 240, la rondelle 154 de ce pion 150 est positionnée à effleurement de la face arrière 143, 243 du bloc de finition 140 ; 240 et la tête 153 du pion 150 est située à l'extérieur du bloc de finition 140 ; 240 en saillie sur la face arrière 143 ; 243 de celui-ci (voir figures 3, 15 et 23).

Comme le montrent plus particulièrement les figures 6 à 12 et 18 à 21, chaque ouverture 126 ; 226 correspondante traverse la plaque de fermeture 121 ; 221 de la paroi de fermeture 120 ; 220 de telle sorte qu'elle débouche sur les faces avant et arrière de la plaque de fermeture 121 ; 221 de la paroi de fermeture 120 ; 220. La largeur de la partie allongée 126B ; 226B de chaque ouverture 126 ; 226, est égale au jeu près au diamètre externe du corps 151 cylindrique du pion 150 tandis que le diamètre de la partie circulaire 126A ; 226A prévue à une extrémité de cette partie allongée 126B ; 226B, est légèrement supérieur au diamètre de la tête 153 et de la rondelle 154 prévues à l'extrémité du corps 151 dudit pion 150.

En outre, les bords longitudinaux de la partie allongée 126B, 226B de chaque ouverture 126 ; 226 sont agencés pour former le passage d'un point dur 126D ; 226D pour le corps 151 cylindrique du pion 150 coulissé dans ladite ouverture 126 ; 226. Ils comportent à cet effet à mi- longueur deux excroissances 126C ; 226C placées face à face qui réduisent la largeur 126D ; 226D de la partie allongée 126B ; 226B de l'ouverture 126 pour le passage du corps 151 du pion 150. A l'extrémité de sa partie allongée 126B ; 226B, opposée à la partie circulaire 126A ; 226A, le bord de chaque ouverture 126 ; 226 ; porte une excroissance 126E ; 226E. L'excroissance 126E ; 226E et les deux excroissances 126C ; 226C forment des moyens de coincement de chaque pion dans chaque ouverture 126 ; 226.

Comme le montrent les figures 3 et 15, le bloc de finition 140 ; 240 muni de ses pions 150, est approché de la paroi de fermeture 120 ; 220 du socle 110 ; 210 par un mouvement de translation selon la flèche F. Il est alors engagé autour de l'enveloppe centrale 130 ; 230 du boîtier de l'appareillage 100 ; 200 jusqu'à ce que les têtes 153 des pions 150 soient engagées dans les parties circulaires 126A ; 226A des ouvertures 126 ; 226 prévues dans la plaque de fermeture 121 ; 221 de la paroi de fermeture 120 ; 220 du socle 110 ; 210 du boîtier de l'appareillage 100 ; 200.

Selon le deuxième mode de réalisation de l'appareillage 200, le bloc de finition 240 est engagé autour de l'enveloppe centrale 230 alors que celle-ci est placée dans une de ses positions extrêmes représentée sur la figure 19.

Comme le montrent plus particulièrement les figures 7, 9, 12 et 19, dans cette position d'engagement, la rondelle 154 de chaque pion 150 reste entièrement positionnée du côté de la face avant de la plaque de fermeture 121 de la paroi de fermeture 120 alors que la tête 153 du pion 150 est entièrement positionnée en dessous de cette plaque de fermeture 121.

Comme le montrent plus particulièrement les figures 4 et 16, dans cette position d'engagement, le bloc de finition 140 ; 240 est légèrement décalé angulairement autour de l'axe central X par rapport au socle 110 ; 210 du boîtier de l'appareillage 100 ; 200 si bien qu'une petite partie du bord avant 112A ; 212A de la paroi latérale 112 ; 212 de ce socle 110 ; 210 est encore visible.

De manière remarquable, on notera que, dans cette position d'engagement, les moyens de montage du bloc de finition sur le socle du boîtier de l'appareillage, sont complètement masqués par le bloc de finition lui-même. Ils disparaissent sous ledit bloc de finition. Cela permet de parfaire l'esthétique de l'ensemble.

A partir de cette position d'engagement représentée sur les figures 4 et 15, le bloc de finition 140 ; 240 est pivoté autour de l'axe central X suivant la flèche R pour l'amener dans sa position finale de montage représentée sur les figures 5 et 17.

Selon le deuxième mode de réalisation de l'appareillage 200 représenté sur les figures 19 à 21, le pivotement du bloc de finition 240 entraîne le pivotement de la base 235 et de l'enveloppe centrale 230 par rapport à la paroi de fermeture 220 autour de l'axe central X depuis la position extrême représentée sur la figure 19 jusqu'à la position extrême représentée sur la figure 21.

Au cours du pivotement du bloc de finition 140 ; 240, comme le montrent les figures 9 à 11 et 19 à 21, le corps 151 de chaque pion 150 glisse selon le cercle C dans la partie allongée 126B ; 226B de l'ouverture 126 ; 226 correspondante, les bords de la partie allongée 126B ; 226B de l'ouverture 126 ; 226 sont pris en sandwich entre la rondelle 154 et la tête 153 dudit pion 150, et ils glissent dans la rainure formée entre les faces 154A ; 153A en regard de ladite rondelle 154 et de ladite tête 153 de ce pion 150 (voir figure 12). Le corps 151 de chaque pion passe le point dur constitué par le passage étroit 126D ; 226D de cette partie allongée 126B ; 226B de l'ouverture 126 ; 226 (voir figures 10 et 20) jusqu'à atteindre le bout de ladite partie allongée 126B ; 226B de l'ouverture 12 ; 226 en butant contre l'excroissance 126E ; 226E (voir figures 8, 11 et 21).

Du fait que la coopération des moyens de montage du bloc de finition sur le socle du boîtier de l'appareillage s'effectue en quelque sorte à l'aveugle, puisque ces moyens de montage sont masqués par le bloc de finition lui-même (comme cela est expliqué ci-dessus), le passage du point dur par le corps des pions provoque avantageusement un clic sonore indiquant à l'utilisateur que le bloc de finition est correctement monté sur le socle du boîtier de l'appareillage.

Lorsque le corps 151 des pions 150 ont atteint le bout de la partie allongée 126B ; 226B des ouvertures 126 ; 226, le bloc de finition 140 ; 240 est placé dans sa position finale sur le socle 110 ; 210 du boîtier de l'appareillage 100 ; 200 dans laquelle il est aligné avec le socle 110 ; 210 comme cela est représenté sur les figures 3 et 17. Dans cette position, la face arrière 143 ; 243 du bloc de finition 140 ; 240 et le bord avant 112A ; 212A de la paroi latérale 112 ; 212 du socle 110 ; 210 sont placés bord à bord. La face latérale 141 ; 241 externe du bloc de finition 140 ; 240 s'étend dans le prolongement de la face externe 112B ; 212B de la paroi latérale 112 ; 212 du socle 110 ; 210, lesdites faces latérales externes 141, 112B ; 241, 212B formant ensemble la face latérale externe de l'appareillage 100 ; 200. La languette 16B de l'élément de marquage 16 fait saillie de cette face latérale externe 141, 112B ; 241, 212B. L'entrée S pour l'introduction d'une extrémité du câble d'alimentation 1 à l'intérieur du socle 110 ; 210, apparaît à la base de cette face latérale externe 141, 112B ; 241, 212B. La face avant 142 ; 242 du bloc de finition 140 ; 240 avec son méplat 142A ; 242A qui entoure la partie fonctionnelle 13 de chaque mécanisme d'appareillage 10, forme la face avant de l'appareillage 100 ; 200, tandis que la plaque arrière 113 ; 213 du socle 110 ; 210 forme la face arrière de l'appareillage 100 ; 200 par laquelle celui-ci peut être posé sur un support quelconque.

Enfin, comme cela a déjà été dit, il est prévu un élément de verrouillage du bloc de finition 140 ; 240 placé en position finale sur le socle 110 ; 210 du boîtier de l'appareillage 100 ; 200.

Cet élément de verrouillage est engagé au travers d'une paroi du socle 110 ; 210 du boîtier de l'appareillage 100 ; 200 et comporte une extrémité libre adaptée à accrocher la tête 153 d'un pion 150 placé en butée contre l'excroissance 126E ; 226E au bout de la partie allongée 126B ; 226B de l'ouverture 126 ; 226 correspondante de la paroi de fermeture 120 ; 220.

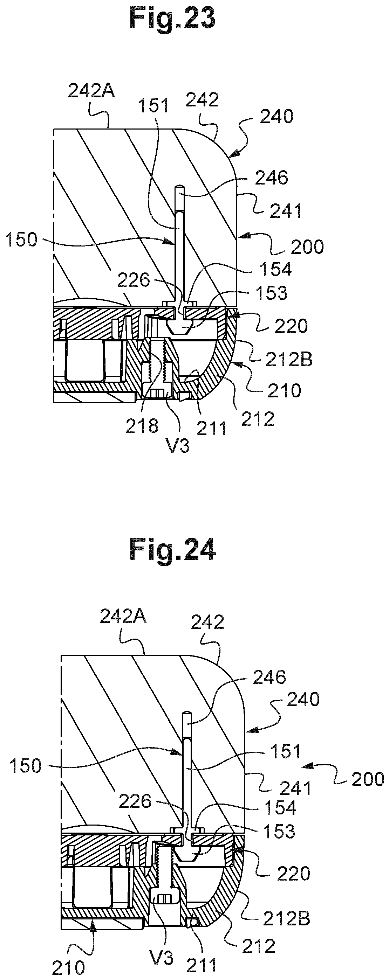

Ici, comme le montrent les figures 23 et 24, cet élément de verrouillage est une vis V3 dont le corps fileté traverse les ouvertures 113A ; 213A des plaques arrière 113 ; 213 du socle 110 ; 210 et est vissé dans un conduit taraudé 118 ; 218 traversant le fond 211 du socle 210.

En position non verrouillée, représentée sur les figures 22 et 23, le corps fileté de la vis V3 est en retrait de l'intérieur du socle 210 de sorte que la tête de la vis V3 est placée à effleurement de la face externe du fond du socle 210. La tête de la vis est alors accessible à un utilisateur.

En position verrouillée, représentée sur la figure 24, après qu'un utilisateur a vissé la vis V3 dans le conduit taraudé 228, l'extrémité libre du corps fileté de la vis v3 est engagée à l'intérieur du socle 210 et accroche la tête 153 du pion 150 qui fait saillie sur la face arrière de la paroi de fermeture 220 de sorte que le pion 150 est bloqué dans l'ouverture 226 et le bloc de finition 240 ne peut plus être retiré du socle 210.

Ce verrouillage permet d'empêcher le vol d'un bloc de finition réalisé avec un matériau de valeur, lorsqu'un appareillage 100 ; 200 est mis à disposition dans des lieux publics ou de passage.

L'appareillage 100 ; 200 est adapté à être posé sur une paroi de réception comme le plateau d'une table ou d'un bureau ou d'un meuble de rangement ou encore d'une console, mais le fait qu'ici le bloc de finition 140 ; 240 est une pièce massive, cubique ou parallélépipédique rectangle, permet d'y ajouter facilement des éléments ou d'y percer des trous pour créer des nouvelles fonctions utiles à l'utilisateur.

Par exemple des aimants peuvent être ajoutés sur le bloc de finition 140 ; 240 pour solidariser l'appareillage 100 ; 200 à un support métallique ou pour le solidariser à un autre appareillage conforme à l'invention.

En outre, le perçage de trous au travers du bloc de finition 140 ; 240 permet de l'équiper d'un lien, enfilé dans un trou, afin d'accrocher ou de suspendre l'appareillage 100 ; 200 à un quelconque support ou encore d'attacher cet appareillage 100 ; 200 à un autre appareillage du même type.

En variante, tout en présentant une forme massive, le bloc de finition 140 ; 240 peut être sensiblement évidé pour être allégé, pour économiser de la matière ou encore pour pouvoir être réalisé par moulage d'une matière synthétique.

En particulier, la forme du bloc de finition peut être modifiée, les moyens de montage peuvent être inversés entre le bloc de finition et la paroi de fermeture.

## Revendications

1. Appareillage (100 ;200) comprenant un boîtier qui enferme au moins un mécanisme d'appareillage (10) avec une partie fonctionnelle (12, 13) présentant une face avant (12A) accessible à l'utilisateur, dans lequel le boîtier comporte un socle (110 ;210) présentant une paroi latérale (112, 212) périphérique avec une face externe (112B, 212B) et un bord avant (112A, 212A) qui délimite une ouverture avant et dans lequel, il est prévu un bloc de finition (140 ;240) présentant une forme massive avec une face arrière (143 ;243), une face avant (142A ; 242A), une face latérale externe (141, 241) s'étendant entre les faces arrière et avant dans le prolongement de la face externe (112B, 212B) de la paroi latérale (112, 212) du socle (110, 210) du boîtier, et une face latérale interne (144 ;244) qui délimite un logement central (145 ; 244A,244B) traversant qui débouche par des ouvertures ((142B,143B ; 242B,243B) sur les faces avant (142A ;242A) et arrière (143 ;243), le bloc de finition (140 ;240) formant avec le socle (110 ;210) un volume unique constituant le volume hors tout de l'appareillage dont le volume hors tout du bloc de finition (140 ;240) en représente une partie, **caractérisé en ce que** l'ouverture avant du socle (110 ;210) est fermée par une paroi de fermeture (120, 220), autour d'une enveloppe centrale (130 ;230) accueillant chaque mécanisme d'appareillage (10), cette enveloppe centrale (130 ;230) s'élevant sur une certaine hauteur au-dessus de la face avant de ladite paroi de fermeture (120 ;220) selon une direction perpendiculaire (X) à celle-ci si bien que la face avant (12A) de la partie fonctionnelle (12, 13) de chaque mécanisme d'appareillage (10) est située en hauteur au-dessus de la face avant de la paroi de fermeture (120 ;220), et **en ce que** les dimensions dudit logement central (145 ; 244A,244B) du bloc de finition correspond au jeu près aux dimensions externes de ladite enveloppe centrale (130 ;230) et la surface de ladite face arrière (143, 243) du bloc de finition (140 ;240) étant prévue si bien que lorsque le bloc de finition (140 ;240) est rapporté de manière amovible sur la face avant de ladite paroi de fermeture (120 ;220) autour de ladite enveloppe centrale (130 ;230), la face arrière (143 ;243) dudit bloc de finition (140 ;240) recouvre la face avant de ladite paroi de fermeture (120 ;220), et la face latérale interne (144 ;244) de ce bloc de finition (140 ;240) s'ajuste autour de la surface périphérique externe de l'enveloppe centrale (130 ;230) du boîtier de sorte que le bord de chaque ouverture (142B ;242B) débouchant sur la face avant (142A ; 242A) dudit bloc de finition (140 ;240) longe le bord externe de la partie fonctionnelle (12) de chaque mécanisme d'appareillage et la face avant (142A ;242A) du bloc de finition (140 ;240) s'étend autour et à effleurement de la face avant (12A) de la partie fonctionnelle (12, 13) de chaque mécanisme d'appareillage (10) pour former avec la face avant (12A) de la partie fonctionnelle (12,13) de chaque mécanisme d'appareillage la face avant dudit appareillage.

2. Appareillage (100 ;200) selon la revendication 1, dans lequel il est prévu des moyens de montage qui interviennent entre le bloc de finition (140 ;240) et la paroi de fermeture (120 ;220) pour autoriser le montage du bloc de finition sur la paroi de fermeture selon un mouvement séquentiel comprenant une translation parallèle à un axe central (X) perpendiculaire à ladite face avant de ladite paroi de fermeture puis une rotation autour dudit axe central.

3. Appareillage (100 ; 200) selon la revendication 2, dans lequel lesdits moyens de montage comprennent des moyens d'emboîtement et de coulissement.

4. Appareillage selon la revendication 1, dans lequel il est prévu des moyens de montage qui interviennent entre le bloc de finition et la paroi de fermeture pour autoriser le montage du bloc de finition sur la paroi de fermeture selon un mouvement unique de translation.

5. Appareillage selon la revendication 4, dans lequel les moyens de montage sont des moyens de coulissement ou des moyens d'emboîtement.

6. Appareillage (100 ; 200) selon l'une quelconque des revendications 2 à 5, dans lequel il est prévu des moyens de verrouillage (V3) du bloc de finition (140 ; 240) en place sur la face avant de la paroi de fermeture.

7. Appareillage (100 ; 200) selon la revendication précédente, dans lequel lesdits moyens de verrouillage (V3) agissent directement sur les moyens de montage (150).

8. Appareillage selon l'une des revendications 2 et 3, dans lequel lesdits moyens de montage comprennent, d'une part, au moins un pion (150) comportant un corps (151) cylindrique dont une extrémité libre est équipée d'une tête (153), et, d'autre part, au moins une ouverture (126 ;226) en forme de trou de serrure apte à accueillir ledit pion (150), cette ouverture (126 ;226) présentant une partie allongée (126B ;226B) s'étendant selon un arc de cercle (C) centré sur ledit axe central (X) et dont une extrémité s'ouvre sur une partie circulaire (126A ;226A) centrée sur ledit arc de cercle (C).

9. Appareillage (100 ; 200) selon la revendication 8, dans lequel lesdits moyens de montage comprennent deux pions (150) positionnés de manière diamétralement opposée par rapport à l'axe central (X) et, en correspondance, deux ouvertures (126 ; 226) positionnées sur un cercle centré sur ledit axe central (X).

10. Appareillage (100 ; 200) selon l'une des revendications 8 et 9, dans lequel lesdits moyens de montage comprennent des moyens de coincement de chaque pion dans chaque ouverture.

11. Appareillage (100 ; 200) selon la revendication précédente, dans lequel les bords de la partie allongée (126B ; 226B) de chaque ouverture (126 ; 226) sont agencés pour former le passage d'un point dur pour le corps (151) cylindrique du pion (150) coulissé dans ladite ouverture (126 ; 226).

12. Appareillage (100 ; 200) selon l'une des revendications 8 à 11, dans lequel chaque pion (150) est fixé au bloc de finition de façon à faire saillie de la face arrière (143 ; 243) de celui-ci et chaque ouverture (126 ; 226) correspondante est prévue dans l'épaisseur de ladite paroi de fermeture (120 ; 220) et débouche sur la face avant de cette dernière.

13. Appareillage (100 ; 200) selon la revendication 12, dans lequel chaque ouverture (126 ; 226) débouche également sur la face arrière de la paroi de fermeture et il est prévu un élément de verrouillage (V3) engagé au travers d'une paroi du socle (110 ; 210) et comportant une extrémité libre adaptée à accrochée la tête (153) d'un pion (150) engagé au travers de l'ouverture correspondante de la paroi de fermeture.

14. Appareillage (100 ; 200) selon la revendication 13, dans lequel ledit élément de verrouillage est une vis (V3) dont le corps fileté est vissé au travers d'un conduit taraudé (118 ; 218) du socle (120 ; 220) pour que l'extrémité libre de ce corps fileté accroche la tête (153) dudit pion (150) qui fait saillie sur la face arrière de la paroi de fermeture.

15. Appareillage (100 ;200) selon l'une quelconque des revendications précédentes, dans lequel la face arrière (143 ;243) du bloc de finition (140 ;240) présente un contour externe (143A ;243A) identique au contour externe du bord avant (112A ;212A) du socle (110 ;210) si bien que lorsque le bloc de finition (140 ;240) est monté sur ladite paroi de fermeture (120 ;220), ladite face arrière (143 ;243) du bloc de finition (140 ;240) et le socle (110 ;210) sont positionnées bord à bord.

16. Appareillage (100) selon l'une quelconque des revendications précédentes, dans lequel l'enveloppe centrale (130) et la paroi de fermeture (120) sont fixes l'une par rapport à l'autre.

17. Appareillage (100) selon la revendication précédente, dans lequel l'enveloppe centrale (130) et la paroi de fermeture (120) appartiennent à une seule pièce monobloc.

18. Appareillage (100) selon l'une des revendications 16 et 17, dans lequel l'enveloppe centrale (130) comporte une enveloppe cylindrique (131) de section circulaire autour d'un axe central (X) perpendiculaire à la face avant de ladite paroi de fermeture (120), cette enveloppe cylindrique (131) étant adaptée à accueillir un seul mécanisme d'appareillage (10).

19. Appareillage (200) selon l'une quelconque des revendications 8 à 14, dans lequel l'enveloppe centrale (230) et la paroi de fermeture (220) sont mobiles en rotation l'une par rapport à l'autre.

20. Appareillage (200) selon la revendication précédente, dans lequel l'enveloppe centrale appartient à une pièce comportant une base (235) dont deux bords courbes (238) diamétralement opposés sont montés glissants dans deux rainures courbes (228) correspondantes prévues dans ladite paroi de fermeture.

21. Appareillage (200) selon l'une des revendications 19 et 20, dans lequel l'enveloppe centrale (230) comporte une pluralité d'enveloppes cylindriques (231) d'axes parallèles, chaque enveloppe cylindrique (231) étant adaptée à accueillir un seul mécanisme d'appareillage.

22. Appareillage (100 ; 200) selon l'une quelconque des revendications précédentes, dans lequel le bloc de finition (140 ; 240) est réalisé dans une ou plusieurs matières choisies parmi la matière synthétique, le bois brut ou aggloméré, la matière métallique, le béton, la pierre brute ou reconstituée, le cuir, le textile tissé ou non tissé.

## Patentansprüche

1. Apparatur (100; 200) mit einem Gehäuse, das mindestens einen Apparaturmechanismus (10) mit einem funktionellen Teil (12, 13) umschließt, das eine für den Benutzer zugängliche Vorderseite (12A) aufweist, wobei das Gehäuse einen Sockel (110; 210) aufweist, der eine umlaufende Seitenwand (112; 212) mit einer Außenseite (112B; 212B) und einer Vorderkante (112A; 212A) hat, die eine vordere Öffnung abgrenzt, und wobei ein Abschlußblock (140; 240) vorgesehen ist, der eine massive Form mit einer Rückseite (143; 243), einer Vorderseite (142A; 242A), einer seitlichen Außenseite (141; 241), die sich zwischen der Rückseite und der Vorderseite in Verlängerung der Außenseite (112B; 212B) der Seitenwand (112; 212) des Sockels (110; 210) des Gehäuses erstreckt, und einer inneren Seitenwand (144; 244), die eine durchgehende zentrale Aufnahme (145; 244A, 244B) begrenzt, die in die Öffnungen (142B, 143B; 242B, 243B) auf der Vorderseite (142A; 242A) und auf der Rückseite (143; 243) mündet, aufweist, wobei der Abschlußblock (140; 240) mit dem Sockel (110; 210) ein einziges Volumen bildet, das das Volumen über alles der Apparatur bildet, von dem das Gesamtvolumen des Abschlußblocks (140; 240) einen Teil darstellt,
**dadurch gekennzeichnet, daß** die vordere Öffnung des Sockels (110; 210) durch eine Abschlußwand (120; 220) um eine zentrale Hülle (130; 230) herum geschlossen ist, die jeden Apparaturmechanismus (10) aufnimmt, wobei sich diese zentrale Hülle (130; 230) über eine gewisse Höhe oberhalb der Vorderseite der Abschlußwand (110; 210) in einer zu dieser senkrechten Richtung (X) erstreckt, so daß sich die Vorderseite (12A) des funktionellen Teils (12, 13) jedes Apparaturmechanismus (10) in der Höhe über der Vorderseite der Abschlußwand (120; 220) befindet, **und daß** die Abmessungen der zentralen Aufnahme (145; 244A, 244B) des Abschlußblocks bis auf das Spiel den äußeren Abmessungen der zentralen Hülle (130; 230) entsprechen und die Oberfläche der Rückseite (143; 243) des Abschlußblocks (140; 240) vorgesehen ist, so daß dann, wenn der Abschlußblock (140; 240) abnehmbar auf die Vorderseite der Abschlußwand (120; 220) um die zentrale Hülle (130; 230) herum aufgebracht wird, die Rückseite (143; 243) des Abschlußblocks (140; 240) die Vorderseite der Abschlußwand (120; 220) bedeckt, und sich die innere Seitenwand (144; 244) dieses Abschlußblocks (140; 240) um die umlaufende äußere Oberfläche der zentralen Hülle (130; 230) des Gehäuses herum einrichtet, so daß der Rand jeder auf der Vorderseite (142A; 242A) des Abschlußblocks (140; 240) mündenden Öffnung (142B; 242B) am äußeren Rand des funktionellen Teils (12) jedes Apparaturmechanismus entlang führt und sich die Vorderseite (142A; 242A) des Abschlußblocks (140; 240) um die Vorderseite (12A) des funktionellen Teils (12, 13) herum und bündig mit der Vorderseite (12A) des funktionellen Teils (12, 13) jedes Apparaturmechanismus (10) erstreckt, um mit der Vorderseite (12A) des funktionellen Teils (12, 13) jedes Apparaturmechanismus die Vorderseite der Apparatur zu bilden.

2. Apparatur (100; 200) gemäß Anspruch 1, bei der Montagemittel vorgesehen sind, die zwischen dem Abschlußblock (140; 240) und der Abschlußwand (120; 220) wirken, um die Montage des Abschlußblocks auf der Abschlußwand in einer sequentiellen Bewegung parallel zu einer zur Vorderseite der Abschlußwand senkrechten zentralen Achse (X) und dann einer Drehung um die zentrale Achse zu ermöglichen.

3. Apparatur (100; 200) gemäß Anspruch 2, bei der die Montagemittel Mittel zum Ineinandergreifen und zum Gleiten aufweisen.

4. Apparatur gemäß Anspruch 1, bei der Montagemittel vorgesehen sind, die zwischen dem Abschlußblock und der Abschlußwand wirken, um die Montage des Abschlußblocks auf der Abschlußwand in einer einzigen Translation zu erlauben.

5. Apparatur gemäß Anspruch 4, bei der die Montagemittel Gleitmittel oder Mittel zum Ineinandergreifen sind.

6. Apparatur (100; 200) gemäß einem der Ansprüche 2 bis 5, bei der Mittel (V3) zum Verriegeln des Abschlußblocks (140; 240) am Ort auf der Vorderseite der Abschlußwand vorgesehen sind.

7. Apparatur (100; 200) gemäß dem vorangehenden Anspruch, bei der die Verriegelungsmittel (V3) direkt auf die Montagemittel (150) einwirken.

8. Apparatur gemäß einem der Ansprüche 2 und 3, bei der die Montagemittel einerseits mindestens einen Zapfen (150) mit einem zylindrischen Körper (151), von dem ein freies Ende mit einem Kopf (153) ausgestattet ist, und andererseits mindestens eine Öffnung (126; 226) in Form eines Schlüssellochs, das geeignet ist, den Zapfen (150) aufzunehmen, aufweisen, wobei die Öffnung (126; 226) einen länglichen Teil (126B; 226B) aufweist, der sich in Form eines Kreisbogens (C) um die zentrale Achse (X) erstreckt und von der sich ein Ende zu einem kreisförmigen, zum Kreisbogen (C) zentrischen Teil (126A; 226A) öffnet.

9. Apparatur (100; 200) gemäß Anspruch 8, bei der die Montagemittel zwei in Bezug auf die zentrale Achse (X) diametral angeordnete Zapfen (150) und entsprechend zwei auf einem zur zentralen Achse (X) zentrischen Kreis angeordnete Öffnungen (126; 226) aufweist.

10. Apparatur (100; 200) gemäß einem der Ansprüche 8 und 9, bei der die Montagemittel Mittel zum Einklemmen jedes Zapfens in jeder Öffnung aufweisen.

11. Apparatur (100; 200) gemäß dem vorangehenden Anspruch, bei der die Ränder des länglichen Teils (126B; 226B) jeder Öffnung (126; 226) dazu ausgelegt sind, die Passage für einen harten Punkt des in der Öffnung (126; 226) geglittenen zylindrischen Körpers (151) des Zapfens (150) zu bilden.

12. Apparatur (100; 200) gemäß einem der Ansprüche 8 bis 11, bei der jeder Zapfen (150) am Abschlußblock so gefestigt ist, daß er auf der Rückseite (143; 243) desselben hervorsteht und daß jede entsprechende Öffnung (126; 226) in der Dicke der Abschlußwand (120; 20) vorgesehen ist und auf der Vorderseite der letzteren mündet.

13. Apparatur (100; 200) gemäß Anspruch 12, bei der jede Öffnung (126; 226) auch auf der Rückseite der Abschlußwand mündet und ein Verriegelungselement (V3) vorgesehen ist, das durch eine Wand des Sockels (110; 210) führt und ein freies Ende aufweist, das dazu ausgelegt ist, am Kopf (153) eines durch die entsprechende Öffnung der Abschlußwand hindurch führenden Zapfens (150) festgehakt zu werden.

14. Apparatur (100; 200) gemäß Anspruch 13, bei der das Verriegelungselement eine Schraube (V3) ist, deren Körper mit Gewinde durch eine mit einem Gewinde versehene Leitung (118; 218) des Sockels (120; 220) geschraubt ist, damit das freie Ende des mit einem Gewinde versehenen Körpers am Kopf (153) des auf der Rückseite der Abschlußwand hervorstehenden Zapfens (150) angreift.

15. Apparatur (100; 200) gemäß einem der vorangehenden Ansprüche, bei der die Rückseite (143; 243) des Abschlußblocks (140; 240) eine mit der äußeren Kontur des Vorderrands (112A; 212A) des Sockels (110; 210) identische äußere Kontur (143A; 243A) aufweist, so daß, wenn der Abschlußblock ((140; 240) auf der Abschlußwand ((120; 220) montiert ist, die Rückseite (143; 243) des Abschlußblocks (140; 240) und der Sockel (110; 210) Rand an Rand gelegen sind.

16. Apparatur (100) gemäß einem der vorangehenden Ansprüche, bei der die zentrale Hülle (130) und die Abschlußwand (120) aneinander befestigt sind.

17. Apparatur (100) gemäß dem vorangehenden Anspruch, bei der die zentrale Hülle (130) und die Abschlußwand (120) zu einem einzigen einstückigen Teil gehören.

18. Apparatur (100) gemäß einem der Ansprüche 16 und 17, bei der die zentrale Hülle (130) eine zylindrische Hülle (131) mit einem kreisförmigen Querschnitt um eine zur Vorderseite der Abschlußwand (120) senkrechte zentrale Achse (X) aufweist, wobei die zylindrische Hülle (131) dazu ausgelegt ist, einen einzigen Apparaturmechanismus (10) aufzunehmen.

19. Apparatur (200) gemäß einem der Ansprüche 8 bis 14, bei der die zentrale Hülle (230) und die Abschlußwand (220) zueinander drehbar beweglich sind.

20. Apparatur (200) gemäß dem vorangehenden Anspruch, bei der die zentrale Hülle zu einem Teil gehört, das eine Basis (235) aufweist, von der zwei diametral gegenüberliegende gekrümmte Ränder (238) in zwei entsprechenden, in der Abschlußwand vorgesehenen gekrümmten Rillen (228) gleitend montiert sind.

21. Apparatur (200) gemäß einem der Ansprüche 19 und 20, bei der die zentrale Hülle (230) eine Anzahl zylindrischer Hüllen (231) mit parallelen Achsen aufweist, wobei jede zylindrische Hülle (231) dazu ausgelegt ist, einen einzigen Apparaturmechanismus aufzunehmen.

22. Apparatur (100; 200) gemäß einem der vorangehenden Ansprüche, bei der der Abschlußblock (140; 240) aus einem oder mehreren unter synthetischem Material, reinem oder zusammengesetztem Holz, metallischem Material, Beton, reinem oder wiederhergestelltem Gestein, Leder, gewebtem oder nicht gewebtem Textil ausgewählten Material gefertigt ist.

## Claims

1. Apparatus (100; 200) comprising a housing which encloses at least one apparatus mechanism (10) with a functional part (12, 13) having a front face (12A) accessible to the user, wherein the housing comprises a base (110; 210) having a peripheral side wall (112, 212) with an external face (112B, 212B) and a front edge (112A, 212A) which delimits a front opening, and wherein a finishing block (140; 240) is provided, having a solid shape with a rear face (143; 243), a front face (142A; 242A), an external lateral face (141, 241) extending between the rear and front faces in the extension of the external face (112B, 212B) of the lateral wall (112, 212) of the base (110, 210) of the housing, and an internal lateral face (144; 244) which delimits a central through-housing (145; 244A, 244B) which opens out through openings (142B, 143B; 242B, 243B) on the front (142A; 242A) and rear (143; 243) faces, the finishing block (140; 240) forming with the base (110; 210) a single volume constituting the overall volume of the apparatus of which the overall volume of the finishing block (140; 240) represents a part, **characterised in that** the front opening of the base (110; 210) is closed by a closing wall (120, 220), around a central envelope (130; 230) receiving each apparatus mechanism (10), this central envelope (130; 230) rising a certain height above the front face of said closing wall (120; 220) in a direction perpendicular (X) thereto so that the front face (12A) of the functional part (12, 13) of each apparatus mechanism (10) is situated in height above the front face of the closure wall (120; 220), and **in that** the dimensions of said central housing (145; 244A, 244B) of the finishing block correspond, within the clearance, to the external dimensions of said central envelope (130; 230) and the surface of said rear face (143, 243) of the finishing block (140; 240) being provided so that when the finishing block (140; 240) is removably fitted to the front face of said closure wall (120; 220) around said central envelope (130; 230), the rear face (143; 243) of said finishing block (140; 240) covers the front face of said closure wall (120; 220), and the inner side face (144; 244) of this finishing block (140; 240) fits around the outer peripheral surface of the central envelope (130; 230) of the housing so that the edge of each opening (142B; 242B) opening onto the front face (142A; 242A) of said finishing block (140; 240) runs along the outer edge of the functional part (12) of each apparatus mechanism and the front face (142A; 242A) of the finishing block (140; 240) extends around and touches the front face (12A) of the functional part (12, 13) of each apparatus mechanism (10) to form with the front face (12A) of the functional part (12, 13) of each apparatus mechanism the front face of said apparatus.

2. Apparatus (100; 200) according to claim 1, wherein mounting means are provided, that act between the finishing block (140; 240) and the closure wall (120; 220) to allow the finishing block to be mounted on the closure wall with a sequential movement comprising a translation parallel to a central axis (X) perpendicular to said front face of said closure wall and then a rotation about said central axis.

3. Apparatus (100; 200) according to claim 2, wherein said mounting means comprise interlocking and sliding means.

4. Apparatus according to claim 1, wherein mounting means are provided that, act between the finishing block and the closure wall to allow the finishing block to be mounted on the closure wall with a single translational movement.

5. Apparatus according to claim 4, wherein the mounting means are sliding means or interlocking means.

6. Apparatus (100; 200) according to any one of Claims 2 to 5, wherein means (V3) for locking the finishing block (140; 240) in place on the front face of the closure wall are provided.

7. Apparatus (100; 200) according to the preceding claim, wherein said locking means (V3) act directly on the mounting means (150).

8. Apparatus according to any one of claims 2 and 3, wherein said mounting means comprise, on the one hand, at least one pin (150) comprising a cylindrical body (151), a free end of which is provided with a head (153), and, on the other hand, at least one opening (126; 226) in the form of a keyhole capable of receiving said pin (150), this opening (126; 226) having an elongate portion (126B; 226B) extending along a circular arc (C) centred with respect to said central axis (X) and one end of which opens onto a circular portion (126A; 226A) centred with respect to said circular arc (C).

9. Apparatus (100; 200) according to claim 8, wherein said mounting means comprise two pins (150) positioned diametrically opposite relative to the central axis (X) and, correspondingly, two openings (126; 226) positioned on a circle centred with respect to said central axis (X).

10. Apparatus (100; 200) according to one of claims 8 and 9, wherein said mounting means comprise means for wedging each pin in each opening.

11. Apparatus (100; 200) according to the preceding claim, wherein the edges of the elongated portion (126B; 226B) of each opening (126; 226) are arranged to form the passage of a hard point for the cylindrical body (151) of the pin (150) slid into said opening (126; 226).

12. Apparatus (100; 200) according to any one of claims 8 to 11, wherein each pin (150) is fixed to the finishing block so as to project from the rear face (143; 243) thereof, and each corresponding opening (126; 226) is provided in the thickness of said closure wall (120; 220) and opens out onto the front face thereof.

13. Apparatus (100; 200) according to claim 12, wherein each opening (126; 226) also opens out onto the rear face of the closure wall and a locking element (V3) is provided that is engaged through a wall of the base (110; 210) and comprising a free end that is suitable for engaging the head (153) of a pin (150) that is engaged through the corresponding opening of the closure wall.

14. Apparatus (100; 200) according to claim 13, wherein said locking element is a screw (V3) the threaded body of which is screwed through a tapped duct (118; 218) of the base (120; 220) so that the free end of said threaded body engages the head (153) of said pin (150) that projects from the rear face of the closure wall.

15. Apparatus (100; 200) according to any one of the preceding claims, wherein the rear face (143; 243) of the finishing block (140; 240) has an external contour (143A; 243A) identical to the external contour of the front edge (112A; 212A) of the base (110; 210) so that when the finishing block (140; 240) is mounted on said closure wall (120; 220), said rear face (143; 243) of the finishing block (140; 240) and the base (110; 210) are positioned edge-to-edge.

16. Apparatus (100) according to any one of the preceding claims, wherein the central envelope (130) and the closure wall (120) are fixed relative to each other.

17. Apparatus (100) according to the preceding claim, wherein the central envelope (130) and the closure wall (120) are integral.

18. Apparatus (100) according to any one of claims 16 and 17, wherein the central envelope (130) comprises a cylindrical envelope (131) of circular section around a central axis (X) perpendicular to the front face of said closure wall (120), this cylindrical envelope (131) being adapted to accommodate a single apparatus mechanism (10).

19. Apparatus (200) according to any one of claims 8 to 14, wherein the central casing (230) and the closure wall (220) are rotatably movable to each other.

20. Apparatus (200) according to the preceding claim, wherein the central envelope belongs to a part comprising a base (235), two diametrically opposite curved edges (238) of which are slidably mounted in two corresponding curved grooves (228) provided in said closure wall.

21. Apparatus (200) according to claim 19 or 20, wherein the central envelope (230) includes a plurality of cylindrical envelopes (231) with parallel axes, each cylindrical envelope (231) being adapted to receive a single apparatus mechanism.

22. Apparatus (100; 200) according to any one of the preceding claims, wherein the finishing block (140; 240) is made of one or more materials chosen from synthetic material, raw or agglomerated wood, metallic material, concrete, raw or reconstituted stone, leather, woven or nonwoven textile.
